# EUROPEAN PATENT SPECIFICATION

(11) **EP 2 110 933 B1**
(45) Date of publication and mention of the grant of the patent: **01.08.2012**
(21) Application number: 08703706.5
(22) Date of filing: 23.01.2008
(51) Int. Cl.: H02K 16/02

(54) **Motor, rotor structure and magnetic machine**
Motor, Rotorstruktur und magnetische Maschine
Moteur, structure de rotor et machine magnétique

(30) Priority: 06.02.2007 JP 2007026422; 06.02.2007 JP 2007026423; 06.02.2007 JP 2007026424; 06.12.2007 JP 2007316189
(43) Date of publication of application: 21.10.2009
(73) Proprietor: Honda Motor Co., Ltd., Tokyo 107-8556 (JP)
(72) Inventor: BANDO, Masashi, Wako-shi Saitama 351-0193 (JP); ABE, Noriyuki, Wako-shi Saitama 351-0193 (JP); AKUTSU, Shigemitsu, Wako-shi Saitama 351-0193 (JP); OYA, Satoyoshi, Wako-shi Saitama 351-0193 (JP)
(74) Representative: Beder, Jens
(86) International application number: PCT/JP2008/050865
(87) International publication number: WO 2008/096600

(56) References cited:
- EP-A1- 2 015 428
- WO-A-2005/050824
- JP-A- 4 331 445
- JP-A- 9 182 395
- JP-A- 07 046 807
- JP-A- 09 182 395
- JP-A- 11 341 757
- JP-A- 2003 164 127
- JP-A- 2003 164 127
- JP-B2- 3 427 511

## Description

### Field of the Invention

The present invention relates to a motor comprising: annular stators arranged so as to surround an axis; a first rotor rotatable around the axis; and a second rotor arranged between the stator and the first rotor, and rotatable around the axis.

### BACKGROUND ART

A conventional motor disclosed in the following Patent Publication 1, for example is known. This motor has an inner rotor, a stator, and an outer rotor. The inner rotor is in a columnar shape in which a plurality of permanent magnets slightly extending in the radial direction are arranged in the circumferential direction. The stator is in a cylindrical shape in which a plurality of armatures are arranged in the circumferential direction and fixed by a resin mold. The outer rotor is in a cylindrical shape including a coil wound around a core formed by a plurality of laminated rings, and electric power is not supplied to the coil. The inner rotor, the stator, and the outer rotor are disposed sequentially from the inside so as to be relatively rotatable.

In this motor, when power is supplied to the stator so as to generate a rotating magnetic field, a magnetic pole of the permanent magnet of the inner rotor is attracted/repelled with respect to the magnetic pole of the stator so that the inner rotor is rotated synchronously with the rotating magnetic field, and the outer rotor is rotated by electromagnetic induction without synchronization with the rotating magnetic field.

Also, the following Patent Publication 2 discloses a biaxial-output type motor in which an annular stator having a plurality of armatures and generating a rotating magnetic field is fixed to a casing, a first rotor supporting a plurality of permanent magnets on the outer circumference is rotatably supported within the stator, and a cylindrical second rotor supporting a plurality of induction magnetic poles made of a soft magnetic body is rotatably supported between the stator and the first rotor, whereby output can be individually taken out of the first rotor and the second rotor.
Patent Publication 1: Japanese Patent Application Laid-open No. 11-341757
Patent Publication 2: Japanese Patent No. 3427511

### DISCLOSURE OF THE INVENTION

### PROBLEMS TO BE SOLVED BY THE INVENTION

However, the motor described in Patent Publication 1 above has a problem that a high efficiency cannot be obtained since the outer rotor is rotated by electromagnetic induction, and the motor functions not as a synchronous machine but as an induction machine. Also, since the outer rotor is rotated by electromagnetic induction, an induction current generated at the coil of the outer rotor and an eddy current generated at the core of the outer rotor cause heat at the outer rotor, which results in a need to cool the outer rotor.

In order to solve the above problems, the applicant proposed a novel motor in Japanese Patent Application No. 2006-217141. The corresponding EP 2015428 A1 is prior art according to Art. 54(3) EPC.

This motor comprises an annular stator arranged so as to surround an axis, an inner rotor rotatable around the axis, and an outer rotor arranged between the stator and the inner rotor and rotatable around the axis. The stator juxtapositionally comprises a first armature row including a plurality of first armatures and generating a first rotating magnetic field rotating along the circumferential direction, and a second armature row including a plurality of second armatures and generating a second rotating magnetic field rotating along the circumferential direction arranged. The inner rotor juxtapositionally comprises a first permanent magnet row including a plurality of first permanent magnets and a second permanent magnet row including a plurality of second permanent magnets. The outer rotor juxtapositionally comprises a first induction magnetic-pole row including a.plurality of first induction magnetic poles made of a soft magnetic body, and a second induction magnetic-pole row including a plurality of second induction magnetic poles made of a soft magnetic body arranged in the axial direction. The first armature row and the first permanent magnet row are opposed on opposite sides in the radial direction of the first induction magnetic-pole row, respectively, and the second armature row and the second permanent magnet row are opposed on opposite sides in the radial direction of the second induction magnetic-pole row, respectively.

However, in the motor proposed in Japanese Patent Application No. 2006-217141, a phase of the first induction magnetic pole and a phase of the second induction magnetic pole supported by the outer rotor are displaced by a half pitch (an electric angle of 90°), which complicates a structure to support the first and second induction magnetic poles in the outer rotor, resulting in a problem that strength of the outer rotor becomes difficult to be secured.

Also, in the biaxial-output type motor disclosed in Patent Publication 2 above, since fixing means such as a bolt is used as means to fix the induction magnetic pole to the rotor, the numbers of parts and assembling steps are increased accordingly, resulting in a problem of increased cost. Particularly, when the induction magnetic pole is made of laminated steel plates, not only it is difficult to accurately machine a female screw therein, but also bolt-fastening strength cannot be sufficiently secured.

Also, in the rotating motor as disclosed in Japanese Patent No. 3427511, if the magnetic poles of the permanent magnets of the inner rotor, the induction magnetic poles of the outer rotor and the magnetic poles of the armatures in the stator are aligned in the radial direction, a magnetic flux from the magnetic pole of the inner rotor passes through the induction magnetic pole of the outer rotor located outside its radial direction to flow to the magnetic pole of the stator located outside in the radial direction. However, if the induction magnetic pole of the outer rotor is displaced in the circumferential direction and located between the two magnetic poles adjacent in the circumferential direction of the inner rotor, the magnetic flux from the magnetic pole of the inner rotor passes through the induction magnetic pole of the outer rotor located outside in the radial direction to short-circuit to the magnetic pole adjacent to the magnetic pole of the inner rotor in the circumferential direction. Therefore, magnetic efficiency is lowered, and performance of the rotating motor is not sufficiently exerted.

The present invention was made in view of the above circumstances, and has a first object to simplify the structure of a rotor supporting induction magnetic poles in a motor, and improve the strength.

Also, the present invention has a second object to reliably fix the induction magnetic poles made of a soft magnetic body to the rotor with a simple structure.

Moreover, the present invention has a third object to improve performance by minimizing short-circuit of a magnetic flux in a magnetic machine in which an induction magnetic-pole row is arranged between first and second magnetic-pole rows.
The patent application WO 2005/050824 discloses an electric motor with two rotors according to the introductory portion of claim 1.

### MEANS FOR SOLVING THE PROBLEMS

The present invention refers to a motor as defined in the independent claim 1. Further embodiments of the invention are claimed in the dependent claims 2 to 15.

With the feature of the present invention according to claim 1, the motor comprises: an annular stator generating first and second rotating magnetic fields by first and second armatures arranged so as to surround an axis; a first rotor having first and second permanent magnet rows including first and second permanent magnets and rotatable around the axis; and a second rotor arranged between the stator and the first rotor, having first and second induction magnetic-pole rows including first and second induction magnetic poles, and rotatable around the axis. The first armature row and the first permanent magnet row are opposed on opposite sides in the radial direction of the first induction magnetic-pole row, respectively, and the second armature row and the second permanent magnet row are opposed on opposite sides in the radial direction of the second induction magnetic-pole row, respectively. Therefore, by controlling electricity to the first and second armatures so as to rotate the first and second rotating magnetic fields, a magnetic path is formed so as to pass through the first and second armatures, the first and second permanent magnets, and the first and second induction magnetic poles, so that one of or both the first rotor and the second rotor can be rotated.

At this time, the phase of the magnetic pole of the first permanent magnet row and the phase of the magnetic pole of the second permanent magnet row of the first rotor are displaced from each other by a half of a predetermined pitch in the circumferential direction, and the phase of polarity of the first rotating magnetic field and the phase of the polarity of the second rotating magnetic field of the stator are displaced from each other by a half of the predetermined pitch in the circumferential direction. Therefore, the phase of the first induction magnetic pole and the phase of the second induction magnetic pole of the second rotor can be matched with each other. By this arrangement, not only the structure of the second rotor is simplified and strength is improved, but also supporting and assembling of the first, second induction magnetic poles in the second rotor are facilitated.

With the feature of the present invention according to claim 2, since the first, second induction magnetic poles are fitted in the plurality of slits provided in the rotor body of the second rotor so as to extend in the axial direction, assembling of the first, second induction magnetic poles to the rotor body is facilitated.

With the feature according to claim 3, the induction magnetic poles are embedded in the second rotor in order to support the plurality of induction magnetic poles made by a soft magnetic body with the predetermined intervals in the circumferential direction in the rotor made by a weak magnetic body and rotating around the axis. Therefore, it is possible to support the induction magnetic poles at the rotor without using a dedicated fixing member such as a bolt, thereby reducing the number of parts corresponding to the number of the fixing members.

With the feature according to claim 4, since a part of the induction magnetic pole is exposed on the outer-circumferential surface of the rotor, it is possible to reduce an air gap generated between the rotor and the magnetic pole and located outside the rotor.

With the fifth feature, since the rotor has a cylindrical shape and a part of the induction magnetic pole is exposed on the inner-circumferential surface of the rotor, it is possible to reduce an air gap generated between the rotor and the magnetic pole and located inside the rotor.

With the feature according to claim 6, since a face on which the rotor and the induction magnetic pole are in contact is made into a shape which limits movement of the induction magnetic pole in the radial direction with respect to the rotor, it is possible to prevent detachment of the induction magnetic pole due to a centrifugal force when the rotor is rotated.

With the feature according to claim 7, since the projections provided on the rotor and the recess provided in the induction magnetic poles are engaged with each other, not only movement of the induction magnetic poles in the radial direction with respect to the rotor is limited by the engagement, but also an unnecessary part of the induction magnetic pole is eliminated by the recess so that eddy loss and hysteresis loss can be reduced.

With the feature according to claim 8, since the plurality of induction magnetic poles and the spacers made by a weak magnetic body located between the induction magnetic poles adjacent in the axial direction are embedded in the plurality of slits provided in the rotor so as to extend in the axial direction, not only assembling of the induction magnetic poles and spacers to the rotor is facilitated but also a magnetic path is cut by the spacers of the weak magnetic body between the induction magnetic poles adjacent in the axial direction.

With the feature according to claim 9, since the face on which the rotor and the spacer are in contact is made into a shape which limits movement of the spacer in the radial direction with respect to the rotor, it is possible to prevent detachment of the spacer due to a centrifugal force when the rotor is rotated.

With the feature according to claim 10, since the outer-circumferential face of the spacer is covered by the ring made by a weak magnetic body, not only it is possible to more reliably prevent detachment of the spacer due to a centrifugal force when the rotor is rotated, but also it is possible to prevent bulging of the central part of the rotor in the axial direction due to the centrifugal force. Supposing that a ring is wound around the soft magnetic body, an unnecessary gap is generated on the outer-circumferential face of the soft magnetic body, but the generation of the gap can be prevented by winding the ring on the outer-circumferential face of the spacer.

With the feature according to claim 11, since the holder is provided in order to limit movement of the induction magnetic pole in the axial direction with respect to the rotor, it is possible to prevent detachment of the induction magnetic pole from the rotor in the axial direction.

With the feature according to claim 12, since the rotor comprises the rotor body in a bottomed cylindrical shape and the cover connected to the rotor body so as to cover the opening of the rotor body, and the rotating shafts are provided in the bottom portions of the rotor body and the cover, the rotor is supported at its opposite ends to stabilize the rotation.

With the feature according to claim 13, in the motor in which the induction magnetic-pole row is arranged between the armature rows and the permanent magnetic rows, the angle formed between opposite ends in the circumferential direction of the induction magnetic poles of the induction magnetic-pole row with respect to the axis is made smaller than at least one of the machine angle corresponding to an electric angle of 180° of the magnetic pole of the first and second armature rows and the machine angle corresponding to an electric angle of 180° of the magnetic pole of the first and second permanent magnet row. Therefore, it is possible to suppress a magnetic short-circuit from being generated between the magnetic poles adjacent in the circumferential direction of the armature rows or the permanent magnet rows through the induction magnetic pole of the induction magnetic-pole row, thereby improving magnetic efficiency.

With the feature according to claim 14, the first rotor or the induction magnetic-pole row is moved so as to function as a motor.

With the feature according to claim 15, the first rotor or the induction magnetic-pole row is moved by an external force. Therefore, it is possible to generate an electromotive force at the plurality of armatures so that they function as a motor.

### BRIEF DESCRIPTION OF THE DRAWINGS

[FIG. 1] FIG. 1 is a front view of a motor according to a first embodiment, taken in the axial direction (view taken along line 1-1 in FIG. 2). (first embodiment)
[FIG. 2] FIG. 2 is a sectional view taken along line 2-2 in FIG. 1. (first embodiment)
[FIG. 3] FIG. 3 is a sectional view taken along line 3-3 in FIG. 2. (first embodiment)
[FIG. 4] FIG. 4 is a sectional view taken along line 4-4 in FIG. 2. (first embodiment)
[FIG. 5] FIG. 5 is a sectional view taken along line 5-5 in FIG. 2. (first embodiment)
[FIG. 6] FIG. 6 is a sectional view taken along line 6-6 in FIG. 3. (first embodiment)
[FIG. 7] FIG. 7 is an exploded perspective view of the motor. (first embodiment)
[FIG. 8] FIG. 8 is an exploded perspective view of an outer rotor. (first embodiment)
[FIG. 9] FIG. 9 is an exploded perspective view of an inner rotor. (first embodiment)
[FIG. 10] FIG. 10 is an enlarged view of part 10 in FIG. 3. (first embodiment)
[FIG. 11 FIG. 11 is a view for explaining magnetic short-circuit of a permanent magnet of the inner rotor. (first embodiment)
[FIG. 12] FIG. 12 is a schematic diagram where the motor is expanded in the circumferential direction. (first embodiment)
[FIG. 13] FIG. 13 are first operational explanatory views when the inner rotor is fixed. (first embodiment)
[FIG. 14] FIG. 14 are second operational explanatory views when the inner rotor is fixed. (first embodiment)
[FIG. 15] FIG. 15 are third operational explanatory views when the inner rotor is fixed. (first embodiment)
[FIG. 16] FIG. 16 are first operational explanatory views when the outer rotor is fixed. (first embodiment)
[FIG. 17] FIG. 17 are second operational explanatory views when the outer rotor is fixed. (first embodiment)
[FIG. 18] FIG. 18 are views illustrating shapes of a projection of a spacer according to a second embodiment. (second embodiment)
[FIG. 19] FIG. 19 is a view corresponding to FIG. 6 according to a third embodiment. (third embodiment)
[FIG. 20] FIG. 20 is a sectional view taken along line 20-20 in FIG. 19. (third embodiment)
[FIG. 21] FIG. 21 is a sectional view taken along line 21-21 in FIG. 19. (third embodiment)
[FIG. 22] FIG. 22 are views corresponding to FIG. 10 according to a fourth embodiment. (fourth embodiment)
[FIG. 23] FIG. 23 is a view corresponding to FIG. 10 according to a fifth example.
[FIG. 24] FIG. 24 is a view corresponding to FIG. 3 according to a sixth example.
[FIG. 25] FIG. 25 are enlarged views of essential parts in FIG.24.

### EXPLANATION OF REFERENCE NUMERALS AND SYMBOLS

- 12L: first stator (stator)
- 12R: second stator (stator)
- 13: outer rotor (rotor, second rotor)
- 14: inner rotor (first rotor)
- 21L: first armature (magnetic pole of first magnetic-pole row, armature)
- 21R: second armature (magnetic pole of first magnetic-pole row, armature)
- 31: rotor body
- 31a: slit
- 31b: projection
- 33: rotor cover
- 34: first outer rotor shaft (rotating shaft)
- 36: second outer rotor shaft (rotating shaft)
- 38L: first induction magnetic pole (induction magnetic pole)
- 38R: second induction magnetic pole (induction magnetic pole)
- 38a: recess
- 39: spacer
- 41: holder
- 52L: first permanent magnet (magnetic pole of second magnetic-pole row)
- 52R: second permanent magnet (magnetic pole of second magnetic-pole row)
- 59: ring
- L: axis
- L0: distance
- L2: distance
- θ0: machine angle
- θ2: angle
- P: predetermined pitch

### DESCRIPTION OF THE PREFERRED EMBODIMENTS

Embodiments of the present invention will be described based on the attached drawings.

### EMBODIMENT 1

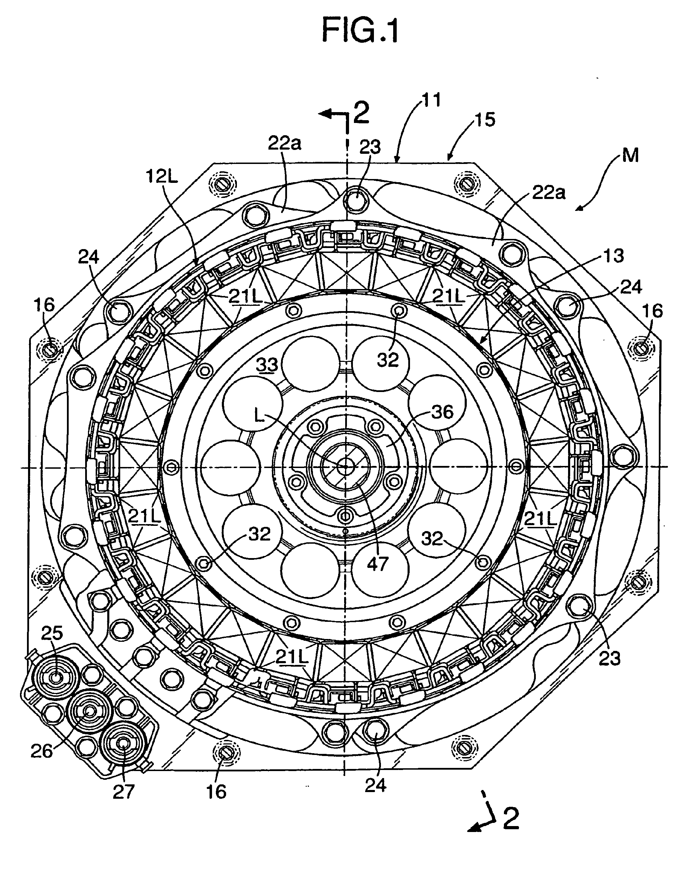

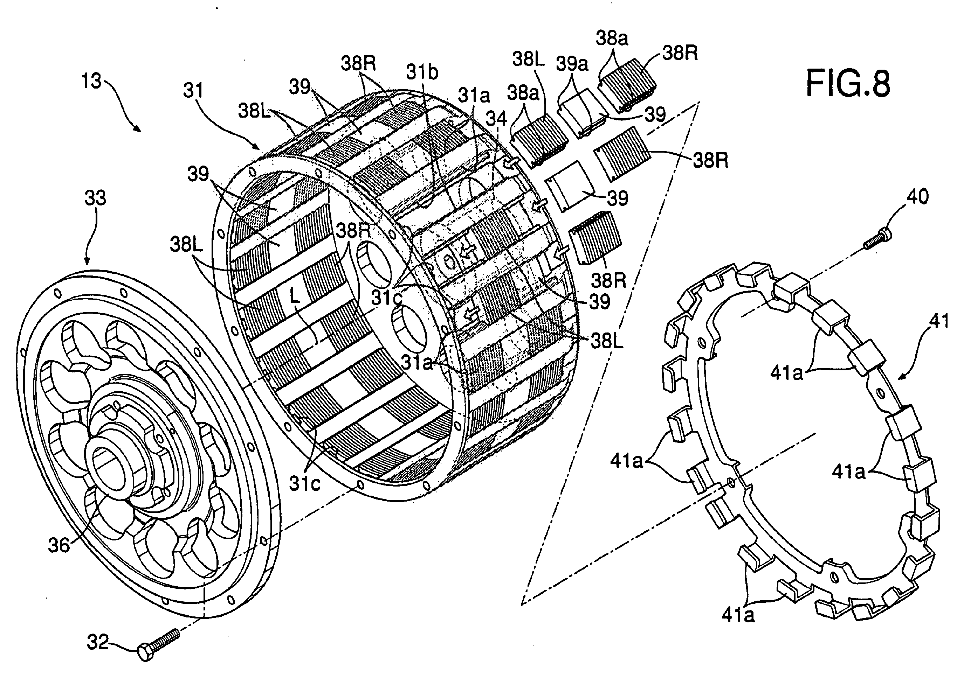

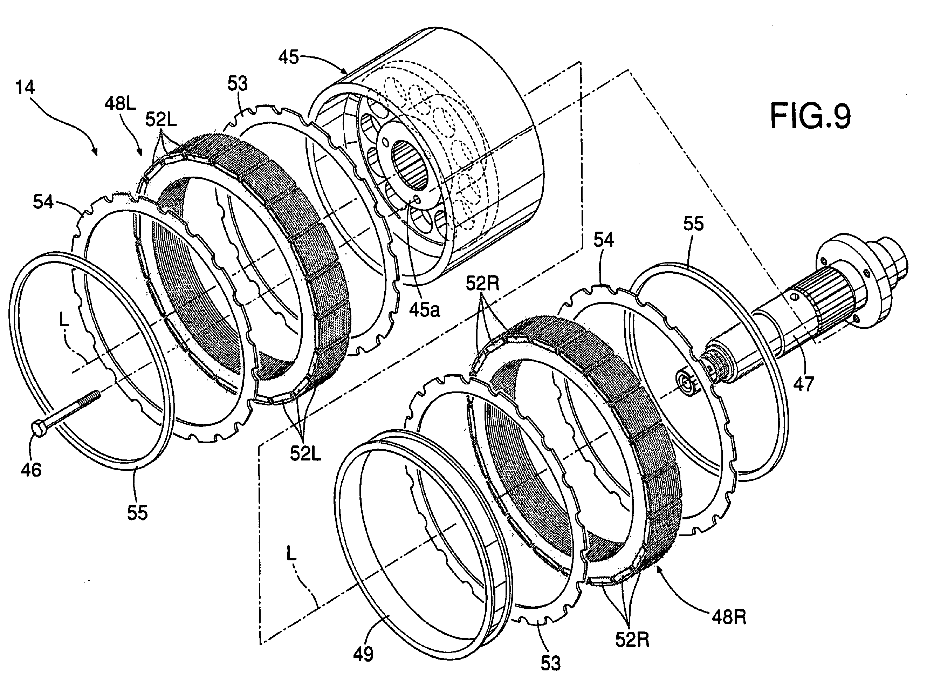

A first embodiment of the present invention will be described based on FIGS. 1 to 17.

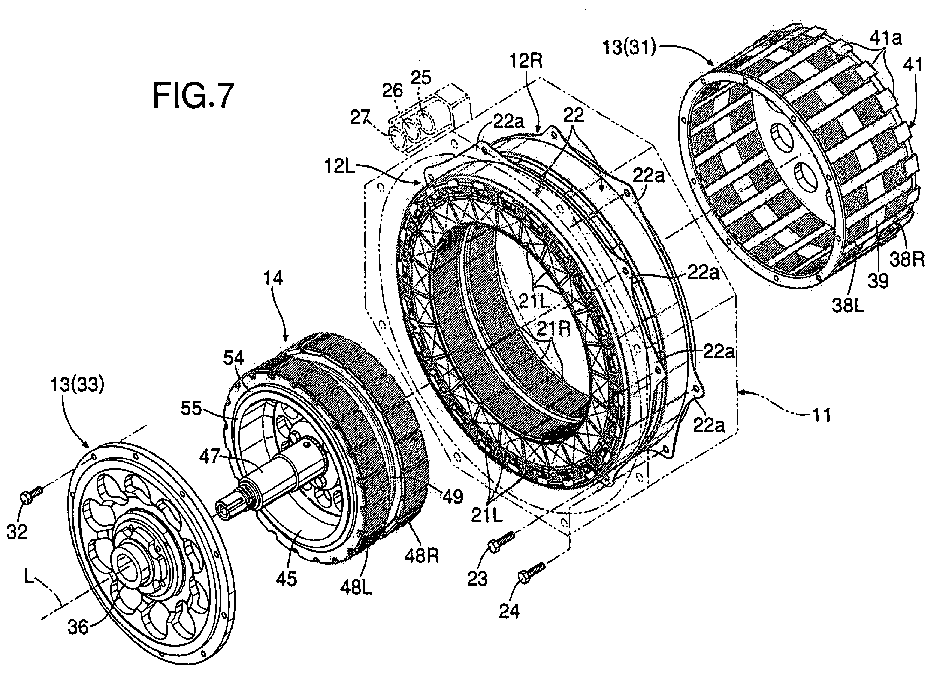

As shown in FIG. 7, a motor M of this embodiment comprises a casing 11 forming an octagonal cylindrical shape, which is short in a direction of an axis L, annular first and second stators 12L, 12R fixed to the inner circumference of the casing 11, a cylindrical outer rotor 13 accommodated within the first and second stators 12L, 12R and rotating around the axis L, and a cylindrical inner rotor 14 accommodated within the outer rotor 13 and rotating around the axis L. The outer rotor 13 and the inner rotor 14 are capable of relative rotation with respect to the fixed first and second stators 12L, 12R, and are capable of relative rotation with each other.

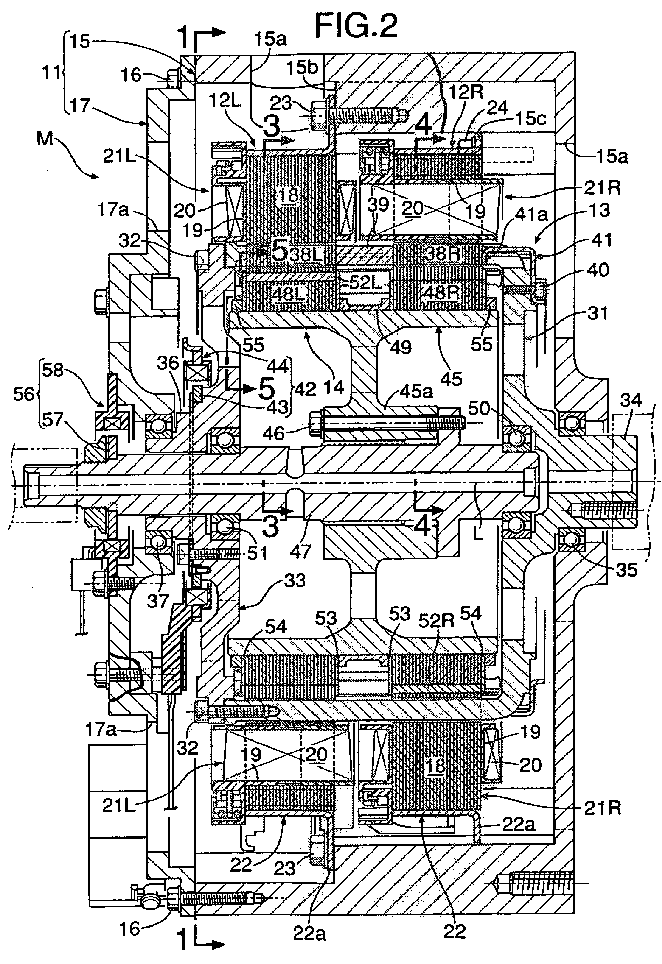

As obvious from FIGS. 1 and 2, the casing 11 has an octagonal bottomed cylindrical body portion 15 and an octagonal-plate-shaped lid portion 17 fixed to an opening of the body portion 15 with a plurality of bolts 16. A plurality of openings 15a, 17a for ventilation are formed in the body portion 15 and the lid portion 17.

As obvious from FIGS. 1 to 4 and 7, the first and second stators 12L, 12R have the same structure, and are superposed on each other while being displaced from each other in the circumferential direction. The structure will be described taking one of them, i.e., the first stator 12L as a representative. The first stator 12L has a plurality (24 pieces in the embodiment) of first armatures 21L each including a coil 20 wound around the outer circumference of a core 18 made of laminated steel plates with an insulator 19 therebetween. These first armatures 21L are integrated by a ring-shaped holder 22 while being connected in the circumferential direction so as to form generally annular shape. A flange 22a projecting in the radial direction from one end on the axis L direction of the holder 22 is fixed to a stepped portion 15b (see FIG. 2) on the inner face of the body portion 15 in the casing 11 by a plurality of bolts 23.

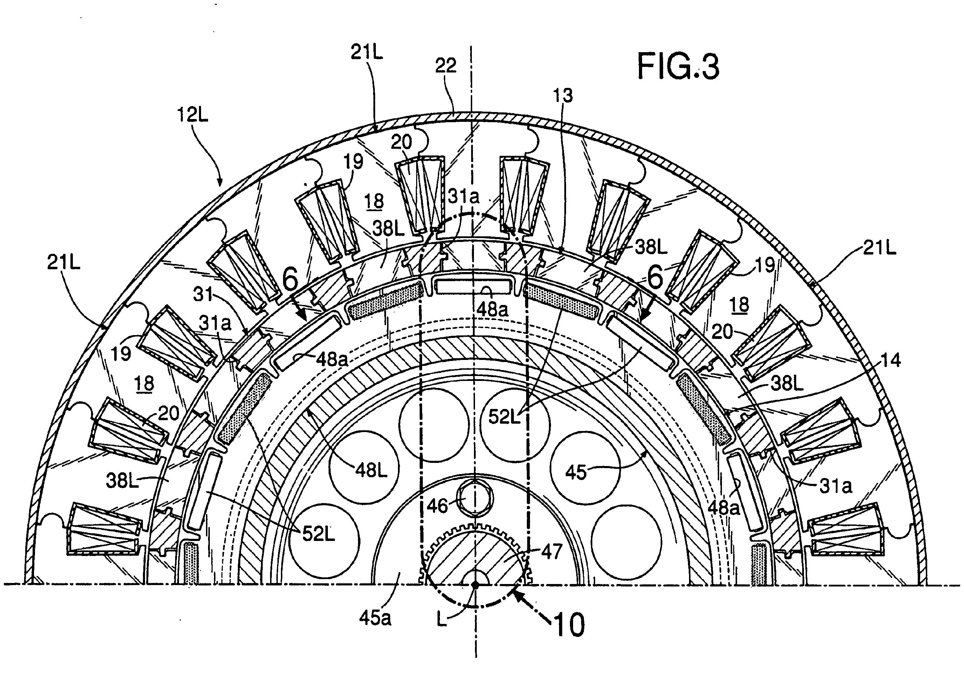

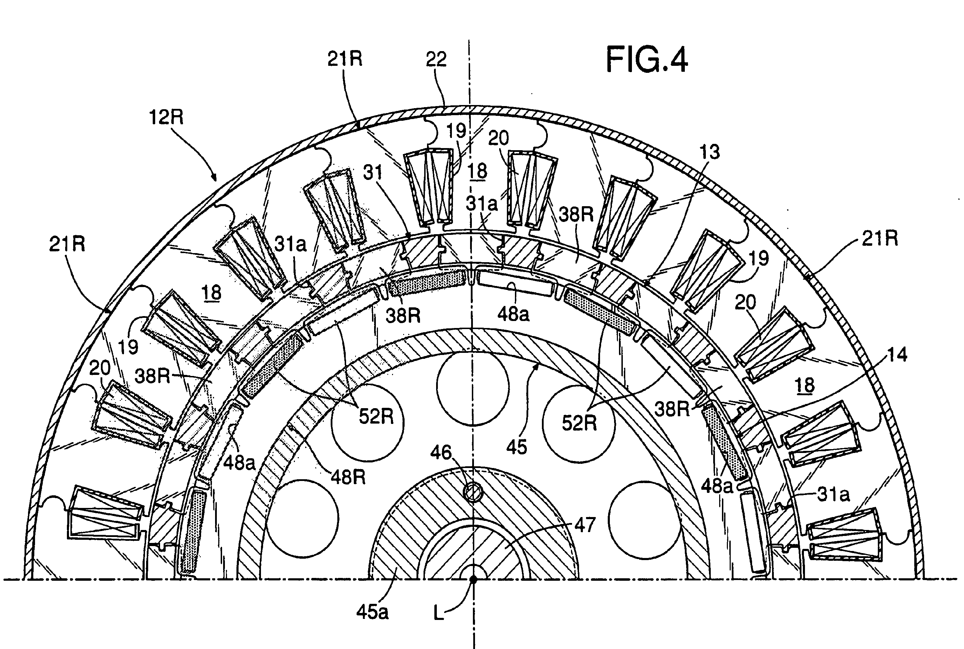

The second stator 12R is provided with 24 pieces of second armatures 21R similarly to the first stator 12L. The flange 22a of the holder 22 is fixed to a stepped portion 15c (see FIG. 2) on the inner face of the body portion 15 in the casing 11 by a plurality of bolts 24. At this time, phases in the circumferential direction of the first stator 12L and the second stator 12R are displaced from each other by a half of a pitch of first and second permanent magnets 52L, 52R of the inner rotor 14 (see FIGS. 3 and 4). A three-phase alternating current is supplied from three terminals 25, 26, 27 (see FIG. 1) provided at the body portion 15 of the casing 11 to the first and second armatures 21L, 21R of the first and second stators 12L, 12R, thereby generating a rotating magnetic field at the first and second stators 12L, 12R.

As obvious from FIGS. 2, 7 and 8, the outer rotor 13 is a hollow member including a rotor body 31 formed by a weak magnetic body in a bottomed cylindrical shape, and a rotor cover 33 formed by a weak magnetic body into a disk shape and fixed by bolts 32 so as to cover the opening of the rotor body 31. A first outer rotor shaft 34 projecting from the center of the bottom portion of the rotor body 31 onto the axis L is rotatably supported by the body portion 15 of the casing 11 by a ball bearing 35. A second outer rotor shaft 36 projecting from the center of the rotor cover 33 onto the axis L is rotatably supported on the lid portion 17 of the casing 11 by a ball bearing 37. The first outer rotor shaft 34 serving as an output shaft of the outer rotor 13 penetrates the body portion 15 of the casing 11 to extend outside.

The weak magnetic body is a material not attracted by a magnet, includes resin, wood and the like in addition to aluminum and the like, and is also called as a non-magnetic body in some cases.

As obvious from FIGS. 2, 6, 8 and 10, a plurality of (20 in the embodiment) slits 31a extending in parallel with the axis L are formed in the outer circumferential face of the rotor body 31 so as to communicate with the inside and outside in the radial direction. Each slit 31a is opened on the bottom-portion side of the rotor body 31, and closed on the opening side of the rotor body 31. First induction magnetic poles 38L made by a soft magnetic body, spacers 39, and second induction magnetic poles 38R made by a soft magnetic body are inserted into the slits 31a in the axis L direction from the bottom-portion side of the rotor body 31 and embedded therein. The first and second induction magnetic poles 38L, 38R are formed by steel plates laminated in the axis L direction.

A pair of projections 31b, 31b projecting in a direction approaching each other are formed on the opposing inner faces of each slit 31a in the rotor body 31. A pair of recesses 38a, 38a; 39a, 39a slidably engaged with the pair of projections 31b, 31b are formed in the outer faces of the first and second induction magnetic poles 38L, 38R and the spacer 39 brought into contact with the inner face of the slits 31a.

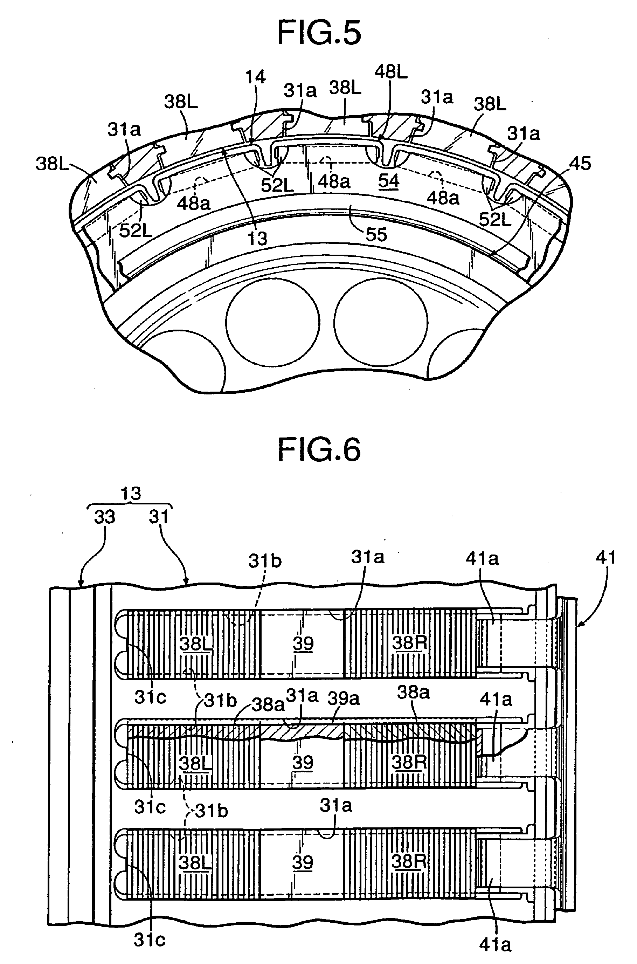

Among the first and second induction magnetic poles 38L, 38R and the spacer 39 inserted into the slit 31a as described above, the front end of the first induction magnetic pole 38L is brought into contact with a stopper 31c (see FIG. 6) at the front end of the slit 31a so as to limit their movement. In this state, one of a plurality of elastic claws 41a projecting in the axis L direction from an annular holder 41 fixed to the bottom portion of the rotor body 31 by bolts 40 is brought into resilient contact with the rear end of the second induction magnetic pole 38R. As a result, the first and second induction magnetic poles 38L, 38R and the spacer 39 inserted into the slit 31a are retained by the stopper 31c and the elastic claw 41a of the holder 41, whereby they are prevented from being pulled out in the axis L direction and rattling is prevented from occurring.

As obvious from FIG. 2, a first resolver 42 for detecting a rotating position of the outer rotor 13 is provided so as to surround the second outer rotor shaft 36 of the outer rotor 13. The first resolver 42 comprises a resolver rotor 43 fixed to the outer circumference of the second outer rotor shaft 36, and a resolver stator 44 fixed to the lid portion 17 of the casing 11 so as to surround the periphery of the resolver rotor 43.

As obvious from FIGS. 2 to 5 and 9, the inner rotor 14 comprises a rotor body 45 formed into a cylindrical shape, an inner rotor shaft 47 penetrating a hub 45a of the rotor body 45 and fixed by a bolt 46, annular first and second rotor cores 48L, 48R including laminated steel plates and fitted on the outer circumference of the rotor body 45, and an annular spacer 49 fitted on the outer circumference of the rotor body 45. One end of the inner rotor shaft 47 is rotatably supported on the axis L by a ball bearing 50 within the first outer rotor shaft 34. The other end of the inner rotor shaft 47 is rotatably supported by a ball bearing 51 within the second outer rotor shaft 36, and penetrates the second outer rotor shaft 36 and the lid portion 17 of the casing 11 to extend outside the casing 11 so as to serve as an output shaft of the inner rotor 14.

The first and second rotor cores 48L, 48R fitted on the outer circumference of the rotor body 45 have the same structure, and are provided with a plurality of (20 pieces in the embodiment) permanent magnet supporting holes 48a along the outer-circumferential face (see FIGS. 3 and 4), into which the first and second permanent magnets 52L, 52R are press-fitted in the axis L direction. The polarity of the adjacent first permanent magnets 52L of the first rotor core 48L are alternately reversed, the polarity of the adjacent second permanent magnets 52R of the second rotor core 48R are alternately reversed, and the phase in the circumferential direction of the first permanent magnets 52L in the first rotor core 48L and the phase in the circumferential direction of the second permanent magnets 52R in the second rotor core 48R are displaced from each other by a half of the pitch (see FIGS. 3 and 4).

The spacer 49 made of the weak magnetic body is fitted in a central portion in the axis L direction in the outer circumference of the rotor body 45; a pair of inner permanent-magnet support plates 53, 53 for retaining the first and second permanent magnets 52L, 52R are fitted on the outside, respectively; the first and second rotor cores 48L, 48R are fitted on the outside, respectively; a pair of outer permanent-magnet support plates 54, 54 retaining the first and second permanent magnets 52L, 52R are fitted on the outside, respectively; and a pair of stopper rings 55, 55 are fixed by press-fitting on the outside, respectively.

As obvious from FIG. 2, a second resolver 56 for detecting a rotational position of the inner rotor 14 is provided so as to surround the inner rotor shaft 47. The second resolver 56 comprises a resolver rotor 57 fixed to the outer circumference of the inner rotor shaft 47, and a resolver stator 58 fixed to the lid portion 17 of the casing 11 so as to surround the periphery of the resolver rotor 57.

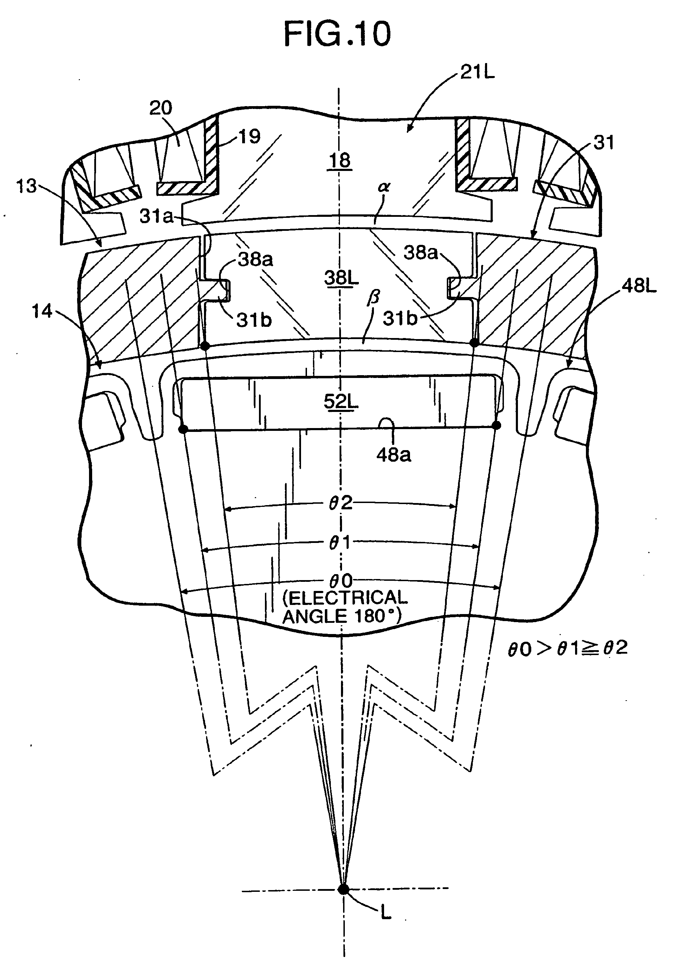

Therefore, as shown in FIG. 10 in an enlarged manner, the inner circumferential face of the first armatures 21L of the first stator 12L is opposed through a slight air gap α
to the outer circumference face of the first induction magnetic poles 38L exposed on the outer circumferential face of the outer rotor 13, and the outer circumferential face of the first rotor core 48L of the inner rotor 14 is opposed through a slight air gap β to the inner circumferential face of the first induction magnetic poles 38L exposed on the inner circumferential face of
the outer rotor 13. Similarly, the inner circumferential face of the second armatures 21R of the second stator 12R is opposed through a slight air gap α to the outer circumference face of the second induction magnetic poles 38R exposed on the outer circumferential face of the outer rotor 13, and the outer circumferential face of the second rotor core 48R of the inner rotor 14 is opposed through a slight air gap β to the inner circumferential face of the second induction magnetic poles 38R exposed on the inner circumferential face of the outer rotor 13.

Next, an operational principle of the motor M of the first embodiment having the above-described structure will be described.

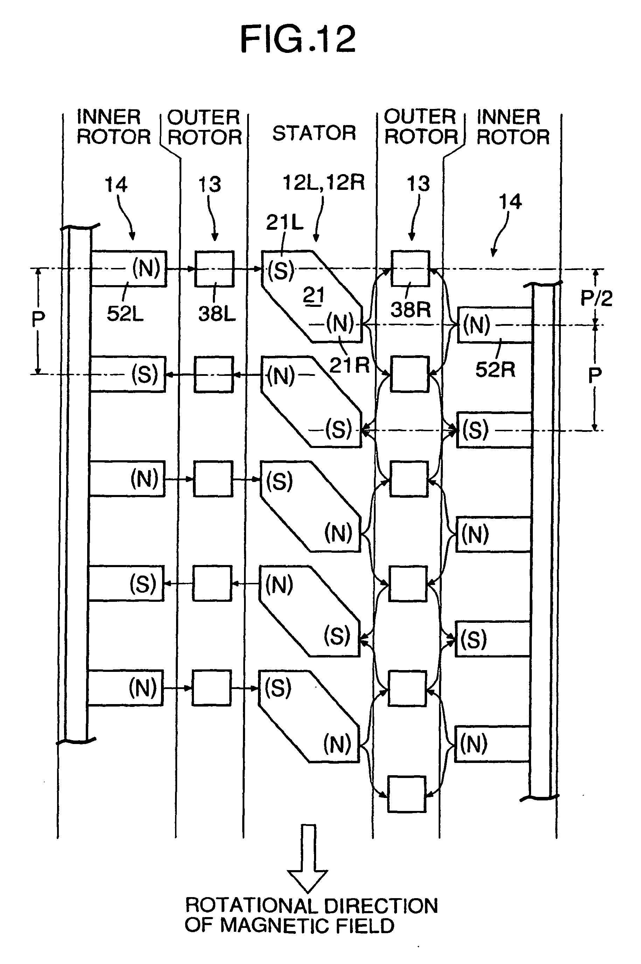

FIG. 12 schematically shows a state where the motor M is extended in the circumferential direction. On both right and left sides in FIG. 12, the first and second permanent magnets 52L, 52R of the inner rotor 14 are shown, respectively. The first and second permanent magnets 52L, 52R are arranged in the circumferential direction (vertical direction in FIG. 12) with N pole and S pole provided alternately at a predetermined pitch P. The first permanent magnets 52L and the second permanent magnets 52R are arranged while displaced from each other by only a half of the predetermined pitch P, that is, a half pitch P/2.

At the center of FIG. 12, virtual permanent magnets 21 corresponding to the first and second armatures 21L, 21R of the first and second stators 12L, 12R are arranged in the circumferential direction with the predetermined pitch P. Actually, the number of the first and second armatures 21L, 21R of the first and second stators 12L, 12R is 24, respectively, and the number of the first and second permanent magnets 52L, 52R of the inner rotor 14 is 20, respectively. Thus, the pitch of the first and the second armatures 21L, 21R does not match the pitch P of the first and second permanent magnets 52L, 52R of the inner rotor 14.

However, since the first and second armatures 21L, 21R form rotating magnetic fields, respectively, the first and second armatures 21L, 21R can be replaced by 20 pieces of the virtual permanent magnets 21 arranged with the pitch P and rotated in the circumferential direction. The first and second armatures 21L, 21R are hereinafter called as first and second virtual magnetic poles 21L, 21R of the virtual permanent magnets 21. The polarity of the first and second virtual magnetic poles 21L, 21R of the virtual permanent magnets 21 adjacent in the circumferential direction are alternately reversed, and the first virtual magnetic poles 21L and the second virtual magnetic poles 21R of the virtual permanent magnets 21 are displaced from each other in the circumferential direction by the half pitch P/2.

The first and second induction magnetic poles 38L, 38R of the outer rotor 13 are arranged between the first and second permanent magnets 52L, 52R and the virtual permanent magnets 21. The first and second induction magnetic poles 38L, 38R are arranged with the pitch P in the circumferential direction, and aligned with the first induction magnetic poles 38L and the second induction magnetic poles 38R in the axis L direction.

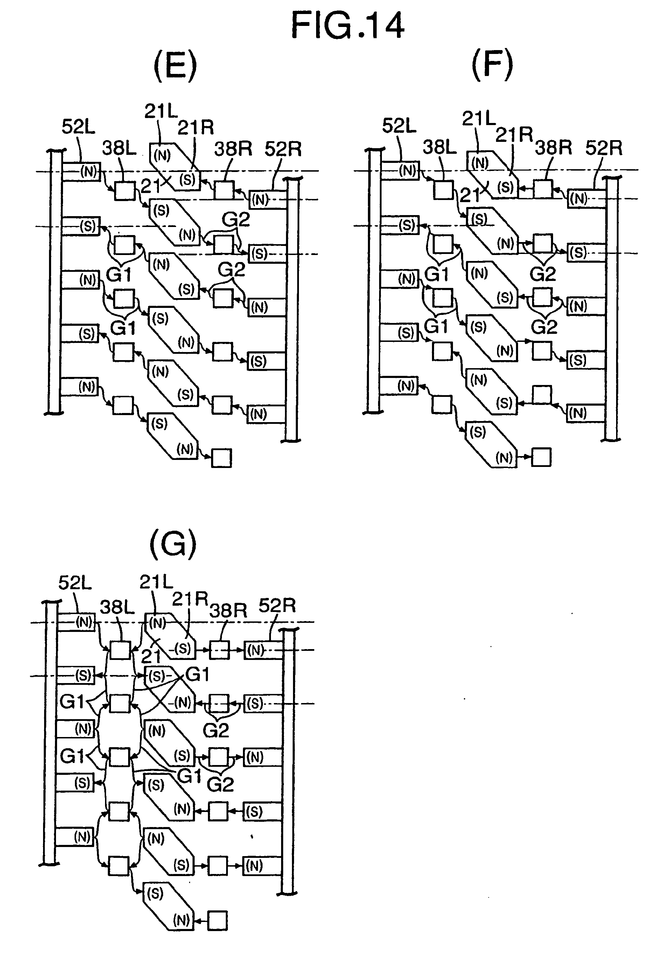

As shown in FIG. 12, when the polarity of the first virtual magnetic pole 21L of the virtual permanent magnet 21 is different from the polarity of the opposing (closest) first permanent magnet 52L, the polarity of the second virtual magnetic pole 21R of the virtual permanent magnet 21 becomes the same as that of the opposing (closest) second permanent magnet 52R. Also, when the polarity of the second virtual magnetic pole 21R of the virtual permanent magnet 21 is different from the polarity of the opposing (closest) second permanent magnet 52R, the polarity of the first virtual magnetic pole 21L of the virtual permanent magnet 21 becomes the same as that of the opposing (closest) first permanent magnet 52L (see FIG. 14(G)).

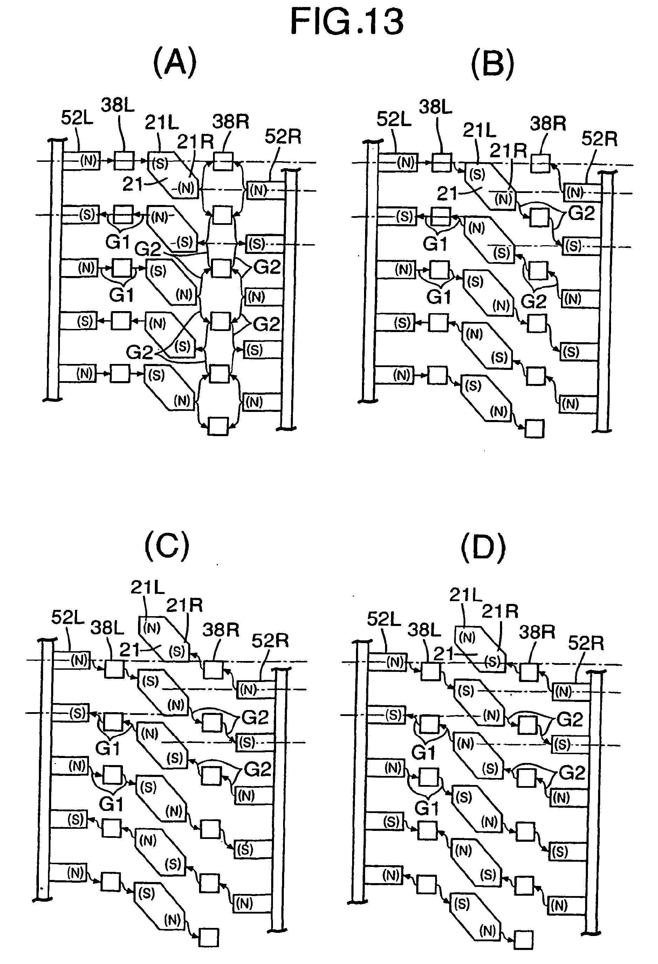

First, the operation will be described in a case where a rotating magnetic field is generated at the first and second stators 12L, 12R (first and second virtual magnetic poles 21L, 21R) so as to drive and rotate the outer rotor 13 (first and second induction magnetic poles 38L, 38R) in a stare where the inner rotor 14 (first and second permanent magnets 52L, 52R) are unrotatably fixed. In this case, the virtual permanent magnets 21 are rotated downward in the figures with respect to the fixed first and second permanent magnets 52L, 52R in the order of FIG. 13 (A), FIG. 13 (B), FIG. 13(C), FIG. 13(D), FIG. 14(E), FIG. 14(F), and FIG. 14(G), whereby the first and second induction magnetic poles 38L, 38R are rotated downward in the figures.

In FIG. 13 (A), the first induction magnetic poles 38L are aligned with respect to the opposing first permanent magnets 52L and the first virtual magnetic poles 21L of the virtual permanent magnets 21, and the second induction magnetic poles 38R are displaced by the half pitch P/2 with respect to the opposing second virtual magnetic poles 21R and the second permanent magnets 52R. In this state, the virtual permanent magnets 21 are rotated downward in FIG. 13(A). At the beginning of the rotation, the polarity of the first virtual magnetic poles 21L of the virtual permanent magnets 21 is different from the polarity of the opposing first permanent magnets 52L, and the polarity of the second virtual magnetic poles 21R of the virtual permanent magnets 21 is the same as the polarity of the opposing second permanent magnets 52R.

Since the first induction magnetic poles 38L are arranged between the first permanent magnets 52L and the first virtual magnetic poles 21L of the virtual permanent magnets 21, the first induction magnetic poles 38L are magnetized by the first permanent magnets 52L and the first virtual magnetic poles 21L, whereby a first magnetic line G1 is generated between the first permanent magnets 52L, the first induction magnetic poles 38L and the first virtual magnetic poles 21L. Similarly, since the second induction magnetic poles 38R are arranged between the second virtual magnetic poles 21R and the second permanent magnets 52R, the second induction magnetic poles 38R are magnetized by the second virtual magnetic poles 21R and the second permanent magnets 52R, whereby a second magnetic line G2 is generated between the second virtual magnetic poles 21R, the second induction magnetic poles 38R and the second permanent magnets 52R.

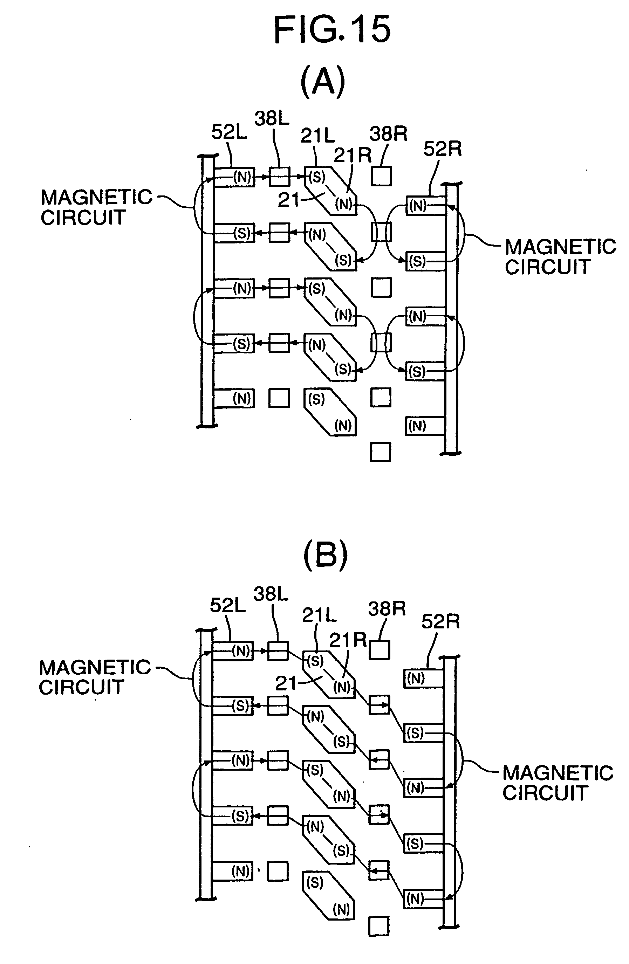

In a state shown in FIG. 13(A), the first magnetic line G1 is generated so as to connect together the first permanent magnets 52L, the first induction magnetic poles 38L, and the first virtual magnetic poles 21L, while the second magnetic line G2 is generated so as to connect each two second virtual magnetic poles 21R adjacent in the circumferential direction and the second induction magnetic poles 38R located therebetween and to connect each two second permanent magnets 52R adjacent in the circumferential direction and the second induction magnetic poles 38R located therebetween. As a result, in this state, a magnetic circuit is established as shown in FIG. 15(A). In this state, a magnetic force for rotation in the circumferential direction does not act on the first induction magnetic poles 38L, since the first magnetic line G1 is linear. Also, a bending degree and a total magnetic flux of the two second magnetic lines G2 are equal to each other between each two second virtual magnetic poles 21R adjacent in the circumferential direction and the second induction magnetic poles 38R, and the bending degree and the total magnetic flux amount of the two second magnetic lines G2 are also equal to each other between each two second permanent magnets 52R adjacent in the circumferential direction and the second induction magnetic poles 38R, thereby establishing a balance. Thus, a magnetic force for rotation in the circumferential direction does not act on the second induction magnetic poles 38R, either.

When the virtual permanent magnets 21 are rotated from positions shown in FIG. 13(A) to positions shown in FIG. 13(B), the second magnetic line G2 connecting together the second virtual magnetic poles 21R, the second induction magnetic poles 38R, and the second permanent magnets 52R is generated, and the first magnetic line G1 between the first induction magnetic poles 38L and the first virtual magnetic poles 21L is bent. With this operation, the first and second magnetic lines G1 and G2 establish a magnetic circuit as shown in FIG. 15(B).

In this state, although the bending degree of the first magnetic line G1 is small, the total magnetic flux amount is large, and thus a relatively large magnetic force acts on the first induction magnetic poles 38L. By this arrangement, the first induction magnetic poles 38L are driven by a relatively large driving force in the rotating direction of the virtual permanent magnets 21, that is, in the magnetic field rotating direction. As a result, the outer rotor 13 is rotated in the magnetic field rotating direction. Also, although the bending degree of the second magnetic line G2 is large, the total magnetic flux amount is small, and thus a relatively small magnetic force acts on the second induction magnetic poles 38R, whereby the second induction magnetic poles 38R are driven by a relatively small driving force in the magnetic field rotating direction. As a result, the outer rotor 13 is rotated in the magnetic field rotating direction.

Then, when the virtual permanent magnets 21 are rotated from positions shown in FIG. 13(B) to positions shown in FIGS. 13(C), 13(D), 14(E), and 14 (F) in this order, the first induction magnetic poles 38L and the second induction magnetic poles 38R are driven in the magnetic field rotating direction by a magnetic force caused by the first and second magnetic lines G1, G2, respectively. As a result, the outer rotor 13 is rotated in the magnetic field rotating direction. During this process, although the bending degree of the first magnetic line G1 becomes larger, the total magnetic flux amount becomes smaller, and thus the magnetic force acting on the first induction magnetic poles 38L is gradually weakened, whereby the driving force driving the first induction magnetic poles 38L in the magnetic field rotating direction is gradually reduced. Also, although the bending degree of the second magnetic line G2 becomes smaller, the total magnetic flux amount becomes larger, and thus the magnetic force acting on the second induction magnetic poles 38R becomes gradually stronger, whereby the driving force driving the second induction magnetic poles 38R in the magnetic field rotating direction is gradually increased.

While the virtual permanent magnets 21 are rotated from positions shown in FIG. 14(E) to positions shown in FIG. 14(F), the second magnetic line G2 is bent, and the total magnetic flux amount becomes close to the largest. As a result, the strongest magnetic force acts on the second induction magnetic poles 38R, and the driving force acting on the second induction magnetic poles 38R becomes the largest. Thereafter, as shown in FIG. 14(G), the virtual permanent magnet 21 is rotated by the pitch P from the initial position in FIG. 13(A), and the first and second virtual magnetic poles 21L, 21R of the virtual permanent magnet 21 are rotated to the position opposed to the first and second permanent magnets 52L, 52R, respectively, resulting in a state where the right side and left side are reversed in FIG. 13(A). Only at this moment, the magnetic force does not act for rotating the outer rotor 13 in the circumferential direction.

In this state, when the virtual permanent magnet 21 is further rotated, the first and second induction magnetic poles 38L, 38R are driven in the magnetic rotating direction by the magnetic force caused by the first and second magnetic lines G1, G2, whereby the outer rotor 13 is rotated in the magnetic rotating direction. At this time, while the virtual permanent magnet 21 is rotated and returned to the position shown in FIG. 13(A) again, the magnetic force acting on the first induction magnetic poles 38L becomes stronger conversely to the above case since the total magnetic flux amount is increased although the bending degree of the first magnetic line G1 is decreased, so that the driving force acting on the first induction magnetic poles 38L becomes larger. On the other hand, the magnetic force acting on the second induction magnetic poles 38R is weakened since the total magnetic flux amount is decreased although the bending degree of the second magnetic line G2 is increased, so that the driving force acting on the second induction magnetic poles 38R becomes smaller.

As obvious from comparison between FIG. 13(A) and FIG. 14(G), with rotation of the virtual permanent magnet 21 by the pitch P, the first and second induction magnetic poles 38L, 38R are rotated only by the half pitch P/2. Therefore, the outer rotor 13 is rotated at a speed of 1/2 of the rotating speed of the rotating magnetic field of the first and second stators 12L, 12R. This is because the first and the second induction magnetic poles 38L, 38R are rotated by the action of the magnetic force caused by the first and second magnetic lines G1, G2, while being kept located between the first permanent magnets 52L and the first virtual magnetic poles 21L connected by the first magnetic line G1 and between the second permanent magnets 52R and the second virtual magnetic poles 21R connected by the second magnetic line G2.

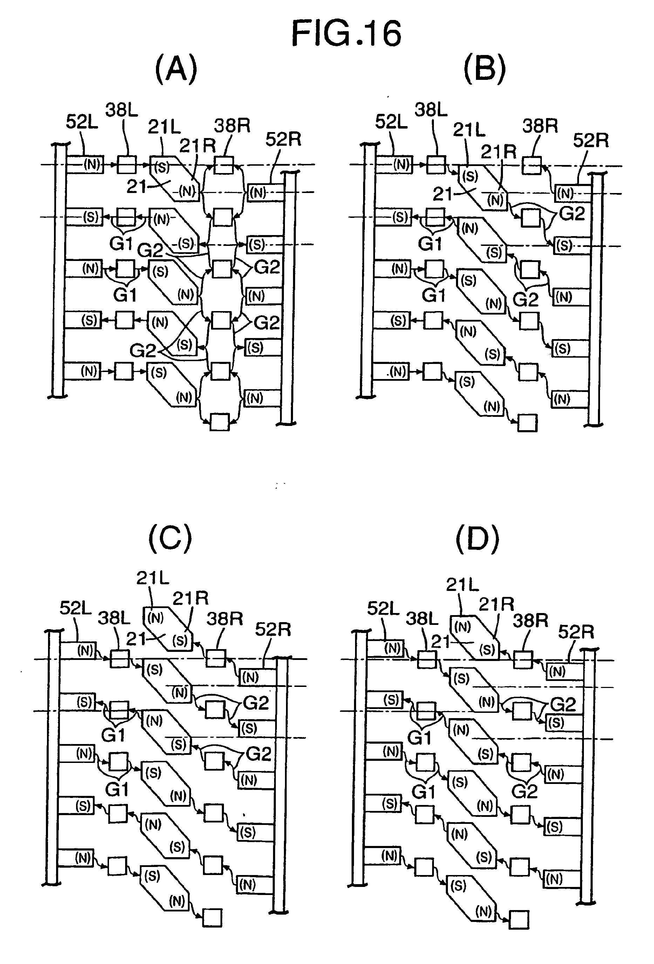

Next, operation of the motor M when the inner rotor 14 is rotated while the outer rotor 13 is fixed will be described with reference to FIGS. 15 and 16.

First, as shown in FIG. 16(A), in a state where each of the first induction magnetic poles 38L is opposed to each of the first permanent magnets 52L, and each of the second induction magnetic poles 38R is located between each two of the adjacent second permanent magnets 52R, the first and second rotating magnetic fields are rotated downward in FIG. 16(A). At beginning of the rotation, the polarity of each of the first virtual magnetic poles 21L is made different from the polarity of each of the opposing first permanent magnets 52L, and the polarity of each of the second virtual magnetic poles 21R is made the same as the polarity of each of the opposing second permanent magnets 52R.

In this state, when the virtual permanent magnets 21 are rotated to positions shown in FIG. 16(B), the first magnetic line G1 between the first induction magnetic poles 38L and the first virtual magnetic poles 21L is bent, and the second virtual magnetic poles 21R approaches the second induction magnetic poles 38R. Therefore, the second magnetic line G2 connecting together the second virtual magnetic poles 21R, the second induction magnetic poles 38R, and the second permanent magnets 52R is generated. As a result, a magnetic circuit as shown in FIG. 15 (B) described above is established at the first and second permanent magnets 52L, 52R, the virtual permanent magnets 21 and the first and second induction magnetic poles 38L, 38R.

In this state, although the total magnetic flux amount of the first magnetic line G1 between the first permanent magnets 52L and the first induction magnetic poles 38L is large, the first magnetic line G1 is straight, and thus a magnetic force to rotate the first permanent magnets 52L with respect to the first induction magnetic poles 38L is not generated. Also, since a distance between the second permanent magnets 52R and the second virtual magnetic poles 21R having a polarity different therefrom is relatively long, although the total magnetic flux amount of the second magnetic line G2 between the second induction magnetic poles 38R and the second permanent magnets 52R is relatively small, the bending degree is large, and thus a magnetic force to bring the second permanent magnets 52R close to the second induction magnetic poles 38R acts on the second permanent magnets 52R. Therefore, the second permanent magnets 52R are driven together with the first permanent magnets 52L in the rotating direction of the virtual permanent magnets 21, that is, a direction (upper side in FIGS. 16 (A) to 16 (D)) opposite from the magnetic field rotating direction, and rotated toward a position shown in FIG. 16(C). With this rotation, the inner rotor 14 is rotated in a direction opposite from the magnetic field rotating direction.

While the first and second permanent magnets 52L, 52R are rotated from the positions shown in FIG. 16 (B) toward the positions shown in FIG. 16(C), the virtual permanent magnets 21 are rotated toward a position shown in FIG. 16(D). As described above, when the second permanent magnets 52R approaches the second induction magnetic poles 38R, the bending degree of the second magnetic line G2 between the second induction magnetic poles 38R and the second permanent magnets 52R becomes smaller, but the total magnetic flux amount of the second magnetic line G2 becomes larger as the virtual permanent magnets 21 further approaches the second induction magnetic poles 38R. As a result, also in this case, the magnetic force to bring the second permanent magnets 52R closer to the second induction magnetic poles 38R acts on the second permanent magnets 52R, whereby the second permanent magnets 52R are driven together with the first permanent magnets 52L in a direction opposite from the magnetic field rotating direction.

Also, as the first permanent magnets 52L is rotated in a direction opposite from the magnetic field rotating direction, the first magnetic line G1 between the first permanent magnets 52L and the first induction magnetic poles 38L is bent, and thus a magnetic force to bring the first permanent magnets 52L closer to the first induction magnetic poles 38L acts on the first permanent magnets 52L. However, in this state, the magnetic force caused by the first magnetic line G1 is weaker than the magnetic force caused by the second magnetic line G2, since the bending degree of the first magnetic line G1 is smaller than the second magnetic line G2. As a result, the second permanent magnets 52R are driven together with the first permanent magnets 52L in a direction opposite from the magnetic field rotating direction by the magnetic force corresponding to a difference between the two magnetic forces.

As shown in FIG. 16(D), when the distance between the first permanent magnets 52L and the first induction magnetic poles 38L becomes substantially equal to the distance between the second induction magnetic poles 38R and the second permanent magnets 52R, the total magnetic flux amount and bending degree of the first magnetic line G1 between the first permanent magnets 52L and the first induction magnetic poles 38L become substantially equal to the total magnetic flux amount and bending degree of the second magnetic line G2 between the second induction magnetic poles 38R and the second permanent magnets 52R, respectively.

As a result, the magnetic forces caused by the first and second magnetic lines G1, G2 are substantially balanced with each other, and thus the first and second permanent magnets 52L, 52R are not driven temporarily.

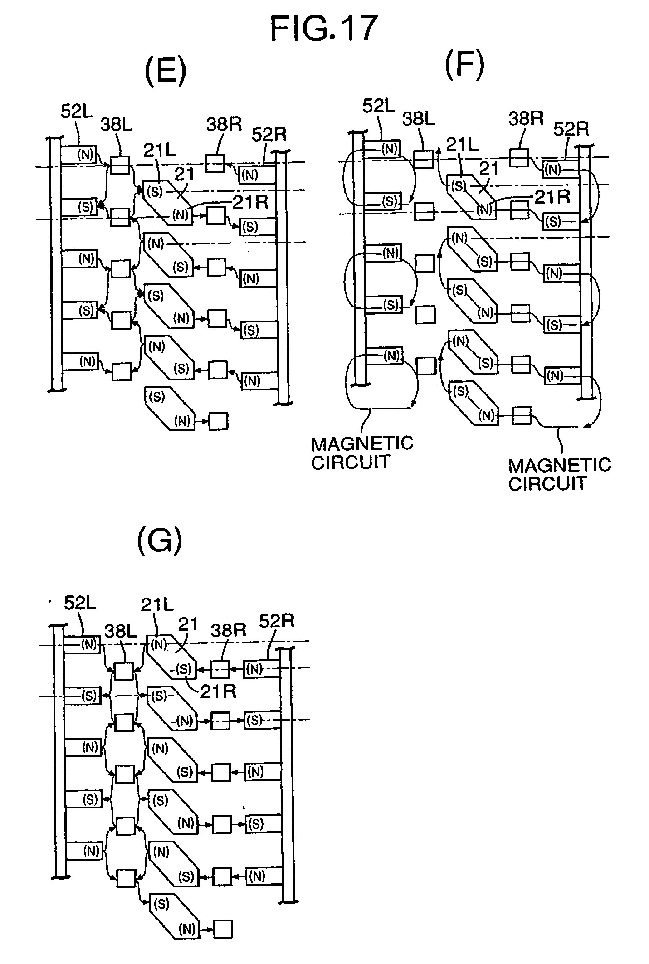

In this state, when the virtual permanent magnets 21 are rotated to positions shown in FIG. 17(E), the generation state of the first magnetic line G1 is changed and a magnetic circuit shown in FIG. 17 (F) is established. Therefore, the magnetic force caused by the first magnetic line G1 hardly acts so as to bring the first permanent magnets 52L closer to the first induction magnetic poles 38L, and thus the second permanent magnets 52R are driven by the magnetic force caused by the second magnetic line G2 together with the first permanent magnets 52L to a position shown in FIG. 17 (G) in a direction opposite from the magnetic field rotating direction.

When the virtual permanent magnets 21 are slightly rotated from the position shown in FIG. 17(G), conversely to the above case, the magnetic force caused by the first magnetic line G1 between the first permanent magnets 52L and the first induction magnetic poles 38L acts on the first permanent magnets 52L so as to bring them closer to the first induction magnetic poles 38L, whereby the first permanent magnets 52L are driven together with the second permanent magnets 52R in a direction opposite from the magnetic field rotating direction, and thus the inner rotor 14 is rotated in a direction opposite from the magnetic field rotating direction. When the virtual permanent magnets 21 are further rotated, the first permanent magnets 52L are driven together with the second permanent magnets 52R in a direction opposite from the magnetic field rotating direction by the magnetic force corresponding to a difference between the magnetic force caused by the first magnetic line G1 between the first permanent magnets 52L and the first induction magnetic poles 38L and the magnetic force caused by the second magnetic line G2 between the second permanent magnets 52R and the second induction magnetic poles 38R. Thereafter, when the magnetic force caused by the second magnetic line G2 hardly acts so as to bring the second permanent magnets 52R closer to the second induction magnetic poles 38R, the first permanent magnets 52L are driven together with the second permanent magnets 52R by the magnetic force caused by the first magnetic line G1.

As described above, with rotation of the first and second rotating magnetic fields, the magnetic force caused by the first magnetic line G1 between the first permanent magnets 52L and the first induction magnetic poles 38L, the magnetic force caused by the second magnetic line G2 between the second permanent magnets 52R and the second induction magnetic poles 38R, and the magnetic force corresponding to a difference between these magnetic forces alternately act on the first and second permanent magnets 52L, 52R, that is, the inner rotor 14, whereby the inner rotor 14 is rotated in a direction opposite from the magnetic field rotating direction. Also, the magnetic forces, that is, the driving forces act on the inner rotor 14, thereby making the torque of the inner rotor 14 constant.

In this case, the inner rotor 14 is rotated at a speed equal to those of the first and second rotating magnetic fields. This is because the first and the second permanents magnets 52L, 52R are rotated, while the first and second induction magnetic poles 38L, 38R are kept located between the first permanent magnets 52L and the first virtual magnetic poles 21L and between the second permanent magnets 52R and the second virtual magnetic poles 21R, respectively, by the action of the magnetic forces caused by the first and second magnetic lines G1, G2.

The case where the inner rotor 14 is fixed and the outer rotor 13 is rotated in the magnetic field rotating direction and the case where the outer rotor 13 is fixed and the inner rotor 14 is rotated in a direction opposite from the magnetic field rotating direction have been separately described above, but it is needless to say that both the inner rotor 14 and the outer rotor 13 may be rotated in mutually opposite directions.

As described above, when one of the inner rotor 14 and the outer rotor 13 or both the inner rotor 14 and the outer rotor 13 are rotated, they can be rotated without slip to improve the efficiency while functioning as synchronized machines, because magnetization states of the first and second induction magnetic poles 38L, 38R are changed according to the relative rotational positions of the inner rotor 14 and the outer rotor 13. Also, since the numbers of the first virtual magnetic poles 21L, the first permanent magnets 52L and the first induction magnetic poles 38L are set equal to each other, and the numbers of the second virtual magnetic poles 21R, the second permanent magnets 52R and the second induction magnetic poles 38R are set equal to each other, it is possible to obtain a sufficient torque of the motor M whichever the inner rotor 14 or the outer rotor 13 is driven.

Then, according to the motor M of this embodiment, since the outer rotor 13 is supported at its opposite ends by the casing 11 via the first outer rotor shaft 34 provided at the rotor body 31 and the second outer rotor shaft 36 provided at the rotor cover 33, thereby enabling a stable rotation of the outer rotor 13.

Also, since the outer rotor 13 is rotatably supported by the casing 11 through the pair of ball bearings 35, 37, and the inner rotor 14 is rotatably supported by the outer rotor 13 through the pair of ball bearings 50, 51 arranged between the pair of ball bearings 35, 37, the dimension of the motor M in the axis L direction can be reduced as compared with the case where the outer rotor 13 and the inner rotor 14 are rotatably supported directly by the casing 11, respectively.

That is because the ball bearings 50, 51 cannot be arranged between the pair of ball bearings 35, 37 of the outer rotor 13 when the inner rotor 14 is directly supported by the casing 11 through the pair of ball bearings 50, 51, and they are required to be arranged in a position outside in the axis L direction of the pair of ball bearings 35, 37 of the outer rotor 13.

Also, since the first resolver 42 for detecting the rotational position of the outer rotor 13 and the second resolver 56 for detecting the rotational position of the inner rotor 14 are arranged together in a concentrated manner on one end side in the axis L direction, that is, on the lid portion 17 side of the casing 11, it is possible to perform the operation, such as inspection, repair, assembling and replacement, of the first and second resolvers 42, 56 at the same time only by removing the lid portion 17, thereby greatly improving convenience. Moreover, handling of harnesses of the first and second resolvers 42, 56 is facilitated.

In the outer rotor 13, since the outer-circumferential and inner-circumferential surfaces of the first and second induction magnetic poles 38L, 38R are exposed on the outer-circumferential surface and the inner-circumferential surface of the rotor body 31, respectively, the air gap α of the outer rotor 13 with respect to the first and second stators 12L, 12R and the air gap β of the inner rotor 14 with respect to the first and second cores 48L, 48R can be minimized, thereby improving the magnetic efficiency.

Moreover, since the first induction magnetic poles 38L and the second induction magnetic poles 38R are arranged with the same phase in the circumferential direction, not only the structure of the rotor body 31 of the outer rotor 13 supporting the first and second induction magnetic poles 38L, 38R is simplified as compared with the arrangement of the first and second induction magnetic poles 38L, 38R with the different phases in the circumferential direction but also strength of the rotor body 31 can be improved.

Particularly, since the support of the first and second induction magnetic poles 38L, 38R and the spacers 39 with respect to the rotor body 31 is established by inserting the first and second induction magnetic poles 38L, 38R and the recesses 38a, 38a; 39a, 39b of the spacer 39 while sliding in the axis L direction with respect to the projections 31b, 31b of the slit 31a in the rotor body 31, not only the assembling work is facilitated but also dedicated fixing means such as bolts are not needed, which contributes to reduction in the number of parts and simplification of the structure. Moreover, it is possible to reliably prevent detachment of the first and second induction magnetic poles 38L, 38R and the spacer 39 in the radial direction by a centrifugal force generated by rotation of the outer rotor 13.

Moreover, the recesses 38a are formed in the first and second induction magnetic poles 38L, 38R, unnecessary portions of the first and second induction magnetic poles 38L, 38R are eliminated by the recesses 38a, thereby reducing eddy loss and hysteresis loss.

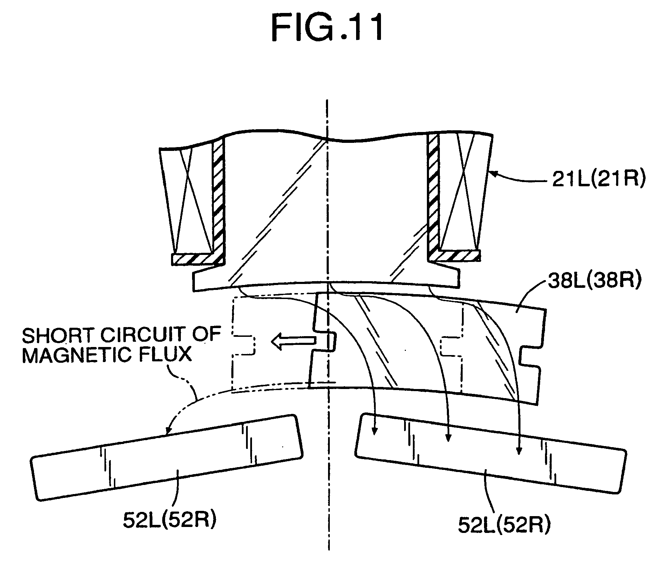

As shown in FIG. 11, in the case where the magnetic flux passes from the first armature 21L of the first stator 12L to the first permanent magnet 52L of the inner rotor 14 through the first induction magnetic pole 38L of the outer rotor 13, if the first induction magnetic pole 38L is present at a position indicated by a chain line, the magnetic flux short-circuits from the first permanent magnet 52L through the first induction magnetic pole 38L to the adjacent first permanent magnet 52L, which lowers the magnetic efficiency. This problem also occurs at the second armatures 21R, the second permanent magnets 52R and the second induction magnetic poles 38R.

In order to solve this problem, in this embodiment, as shown in FIG. 10, an angle θ2 formed by two straight lines drawn from the axis L to opposite ends in the circumferential direction of the first and second induction magnetic poles 38L, 38R is set smaller than a mechanical angle θ0 corresponding to an electric angle 180° of the first and second permanent magnets 52L, 52R. θ1 is an angle formed by two straight lines drawn from the axis L to opposite ends in the circumferential direction of the first and second permanent magnets 52L, 52R, and the relationship among the three angles is θ0 > θ1 ≥ θ2. By this arrangement, it is possible to minimize the magnetic short-circuit between the two first permanent magnets 52L, 52L adjacent in the circumferential direction or the magnetic short-circuit between the two second permanent magnets 52R, 52R adjacent in the circumferential direction.

### EMBODIMETN 2

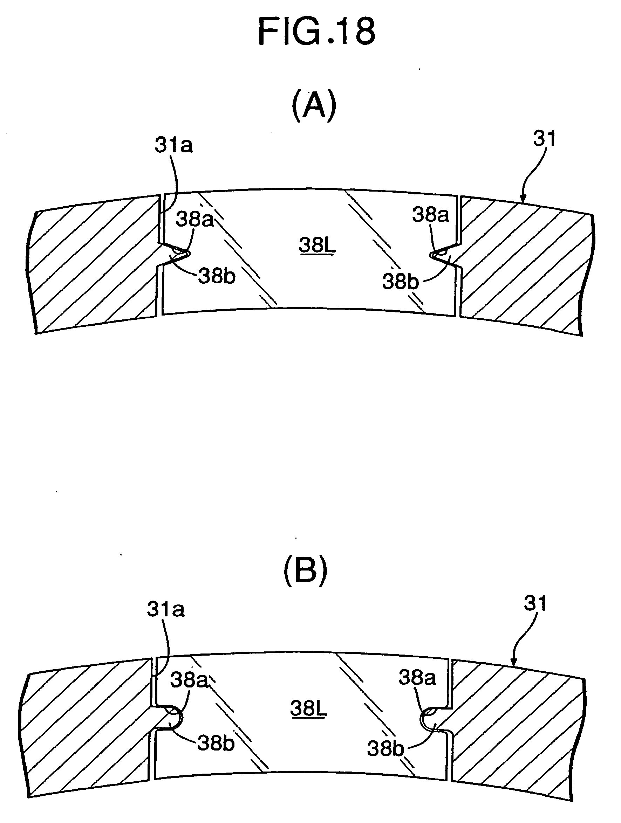

Next, a second embodiment of the present invention will be described based on FIG. 18.

In the first embodiment, the shape of the recesses 38a, 39a of the first and second induction magnetic poles 38L, 38R and the spacer 39, as well as the shape of the projections 31b of the slits 31a in the rotor body 31 are square, but the same effects can be achieved also by a triangular shape as shown in FIG. 18 (A) or an U-shape as shown in FIG. 18(B).

Further, the first and second induction magnetic poles 38L, 38R can be reliably supported by reversing the positional relationship among the recesses 38a, 39a and the projections 31b, forming the projections on the side of the first and second induction magnetic poles 38L, 38R and the spacer 39, and forming the recesses on the side of the slits 31a. However, if the recesses 38a are formed on the side of the first and second induction magnetic poles 38L, 38R as in the embodiments, eddy loss and hysteresis loss can be reduced as compared with the case where the recesses are formed on the side of the slits 31a.

### EMBODIMENT 3

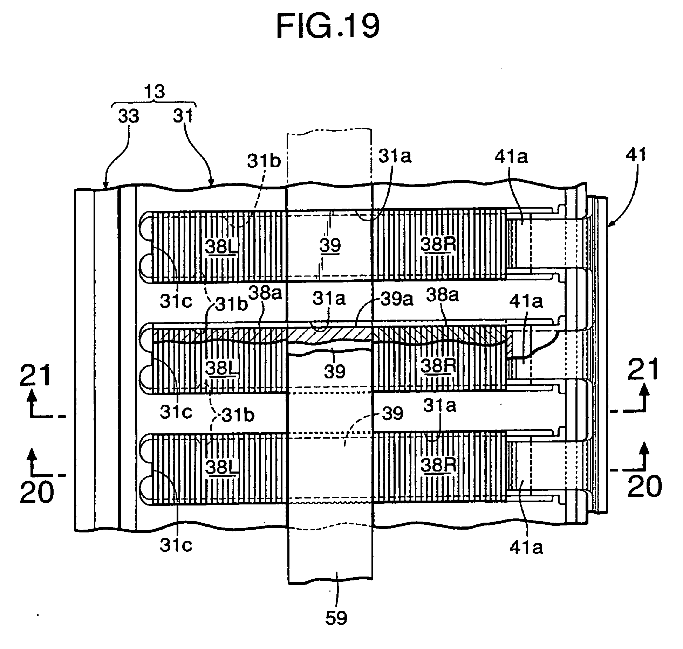

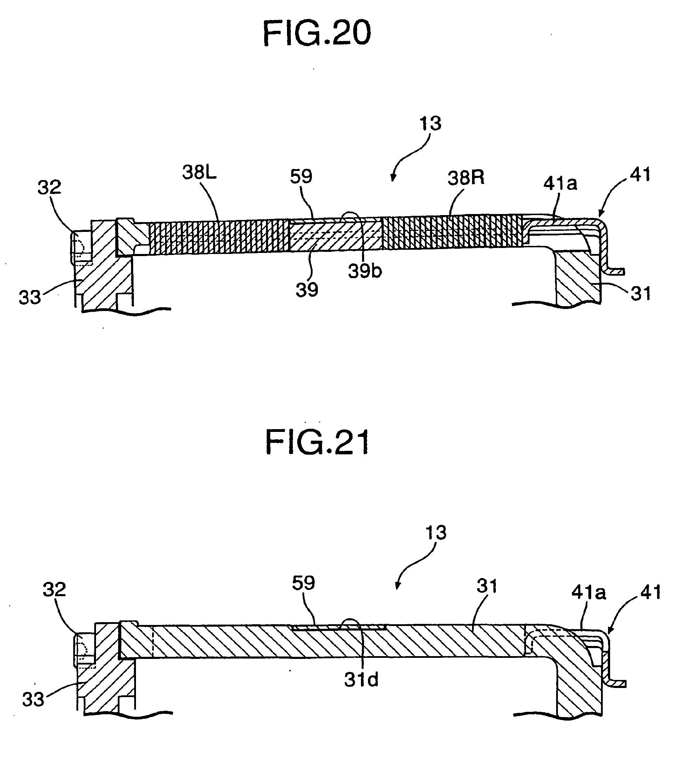

Next, a third embodiment of the present invention will be described based on FIG. 19 to FIG. 21.

In the third embodiment, grooves 39b extending in the circumferential direction are formed in the surface of the spacers 39 of the outer rotor 13, grooves 31d leading to the grooves 39b of the spacers 39 are formed in the outer circumferential face of the rotor body 31 of the outer rotor 13, and a ring 59 made of a weak magnetic body is fitted in the grooves 39b, 31d.

When the outer rotor 13 is rotated, a centrifugal force acts on the first and second induction magnetic poles 38L, 38R and the spacers 39, an intermediate portion of the rotor body 31 in the axis L direction is deformed to bulge. However, the intermediate portion of the rotor body 31 in the axis L direction is pressed by the ring 59, thereby preventing the deformation.

### EMBODIMENT 4

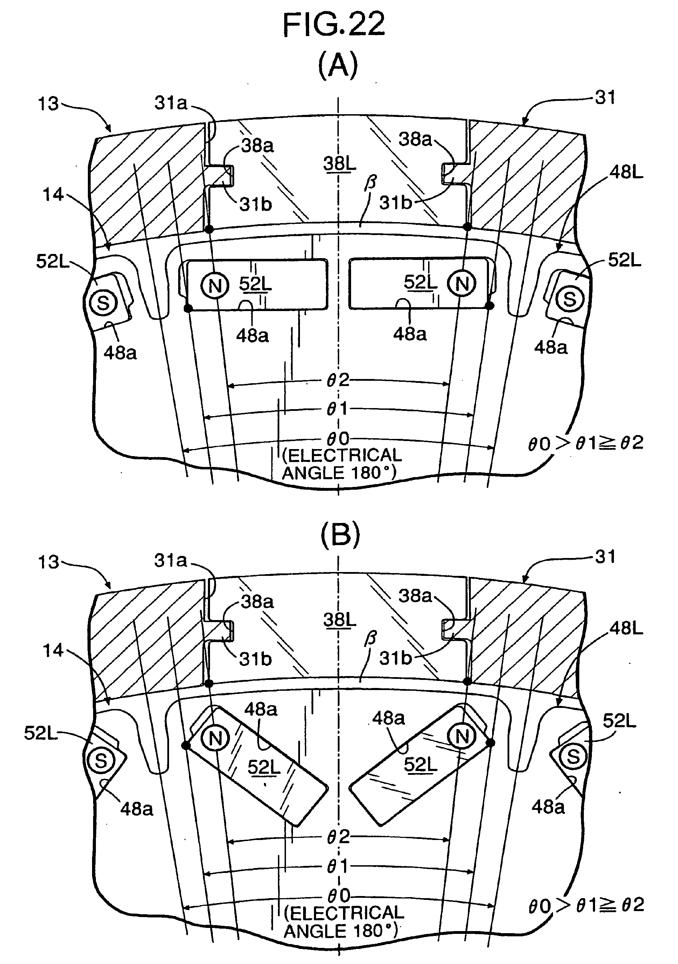

Next, a fourth embodiment of the present invention will be described based on FIG. 22.

In the fourth embodiment, the first permanent magnet 52L or the second permanent magnet 52R constituting a single magnetic pole of the inner rotor 14 is divided into two parts. In this case, in order for the two permanent magnets to constitute a single magnetic pole, it is necessary for the polarities of the two permanent magnets to match with each other.

In this case, θ0 corresponding to the electric angle 180° of the magnetic pole in the inner rotor 14 is defined as an angle formed by two radial lines passing between adjacent pairs, when the two permanent magnets 52L, 52L (or 52R, 52R) constituting a single magnetic pole are made as a pair.

### Example 5

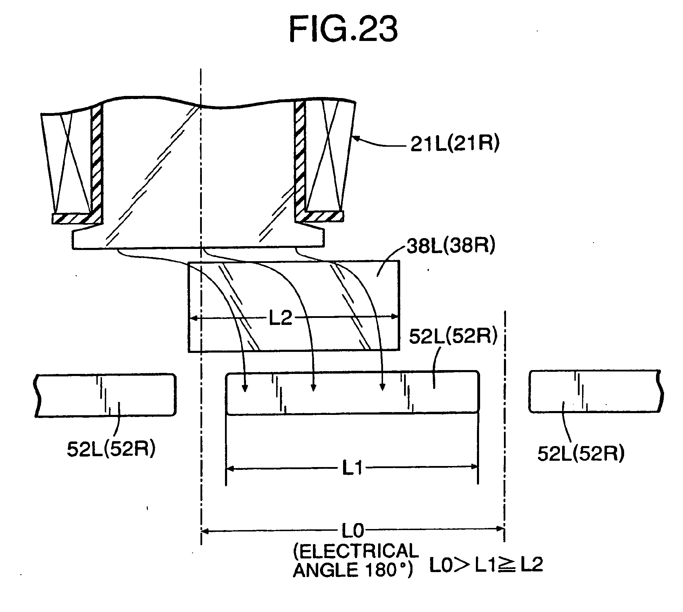

Next, a fifth example not being part of the present invention will be described based on FIG. 23.

In the above-described first to fourth embodiments, the present invention is applied to the rotating-type motor M, but in the fifth example, linear-motion type motor M (so-called linear motor) is shown.

In this case, as shown in FIG. 12, a linear induction magnetic-pole row formed by the first and second induction magnetic poles 38L, 38R is arranged between a linear first magnetic-pole row consisting of the first and second armatures 21L, 21R and a linear second magnetic-pole row consisting of the first and second permanent magnets 52L, 52R. Thus, if electricity is supplied to the first and second armatures 21L, 21R so as to generate a moving magnetic field at the first magnetic-pole row, one of or both the second magnetic-pole row and the induction magnetic-pole row can be moved in the linear direction.

Then, as shown in FIG. 23, a distance L2 between opposite ends in the linear direction between the first and second induction magnetic poles 38L, 38R of the induction magnetic-pole row is set smaller than a distance L0 corresponding to the electric angle 180° of the first and second permanent magnets 52L, 52R of the second magnetic-pole row, whereby it is possible to suppress a magnetic short-circuit from being generated between the first permanent magnets 52L (or the second permanent magnets 52R) adjacent in the linear direction of the second magnetic-pole row through the first induction magnetic poles 38L (or second induction magnetic poles 38R) of the induction magnetic-pole row, thereby improving magnetic efficiency.

### Example 6

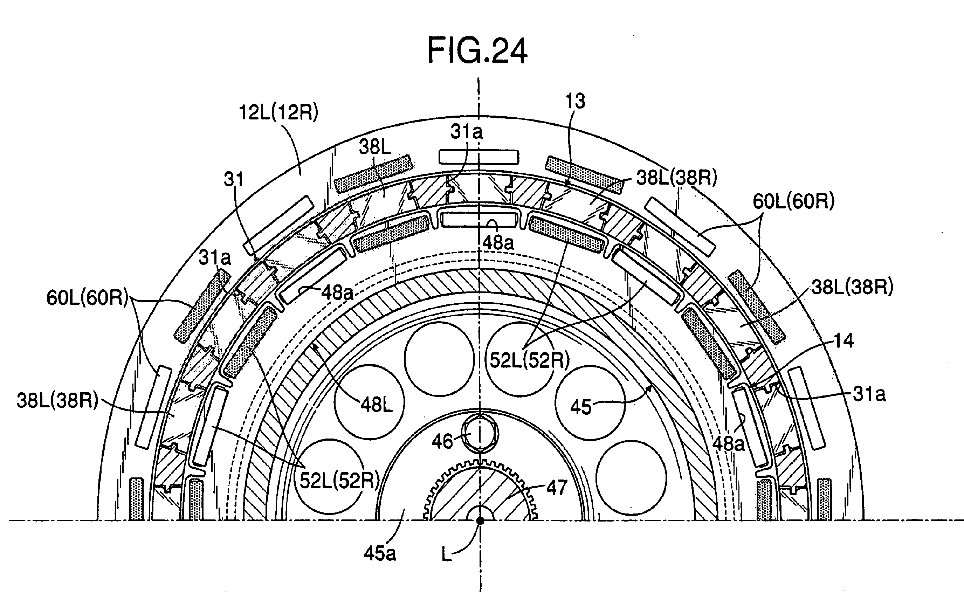

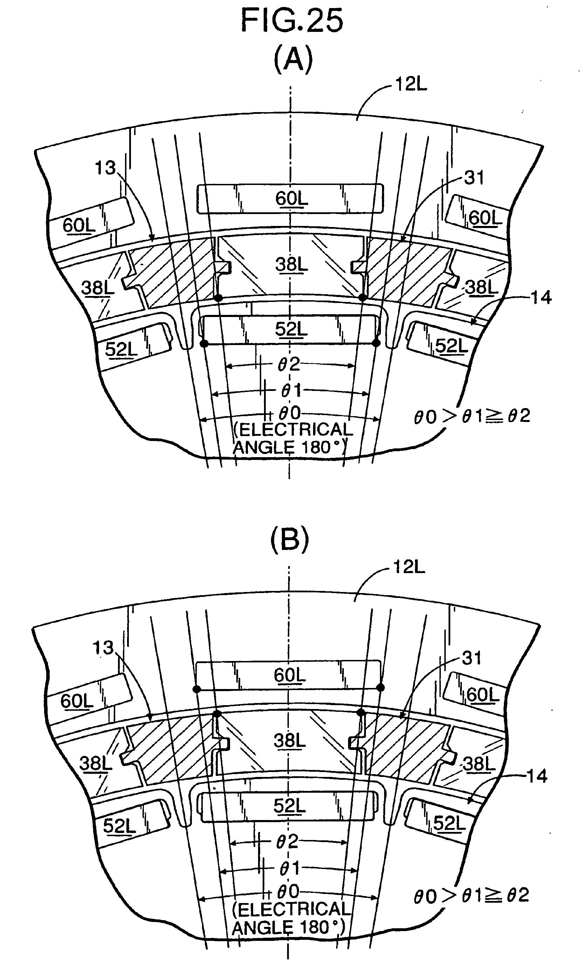

Next, a sixth example not being part of the present invention will be described based on FIGS. 24 and 25.

In the sixth example a magnetic gear is shown, in which the first and second stators 12L, 12R are provided with first and second permanent magnets 60L, 60R instead of the first and second armatures 21L, 21R. When one of the inner rotor 14 and the outer rotor 13 is driven while the first and second stators 12L, 12R are fixed, the other is rotated correspondingly, thereby constituting a power transmission mechanism. If the inner rotor 14 is fixed, a driving force can be transmitted between the first and second stators 12L, 12R and the outer rotor 13; if the outer rotor 13 is fixed, the driving force can be transmitted between the first and second stators 12L, 12R and the inner rotor 14; and if the three are made rotatable, they can function as a differential device.

Also in this embodiment, as shown in FIG. 25(A), θ0 corresponding to the electric angle 180° of the first and second permanent magnets 52L, 52R of the inner rotor 14 is set so that a relationship of 90 < θ1 ≤ θ2 is established with respect to an angle θ2 formed by two straight lines drawn from the axis L to opposite ends of the first and second induction magnetic poles 38L, 38R in the circumferential direction, and an angle θ1 formed by two straight lines drawn from the axis L to opposite ends of the first and second permanent magnets 52L, 52R in the circumferential direction have.

Similarly, as shown in FIG. 25(B), θ0 corresponding to the electric angle 180° of the first and second permanent magnets 60L, 60R of the first and second stators 12L, 12R is set so that a relationship of θ0 < θ1 ≤ θ2 is established with respect to the angle θ2 formed by two straight lines drawn from the axis L to opposite ends of the first and second induction magnetic poles 38L, 38R in the circumferential direction, and the angle θ1 formed by two straight lines drawn from the axis L to opposite ends of the first and second permanent magnets 60L, 60R in the circumferential direction.

The motor M is illustrated in the embodiments, but the present invention is applicable to a motor which generates an electromotive force at a stator by fixing one of the outer-rotor and the inner rotor and rotating the other.

Also, in the embodiments, the armatures 21L, 21R are provided at the stators 12L, 12R arranged outside in the radial direction, and the permanent magnets 52L, 52R are provided at the inner rotor 14 arranged inside in the radial direction, but their positional relationship may be reversed so that the stator having the armature 21L, 21R is arranged inside in the radial direction and the outer rotor having the permanent magnets 52L, 52R is arranged outside in the radial direction.

In the embodiments, the stators 12L, 12R, the outer rotor 13 and the inner rotor 14 are arranged in the radial direction (radial arrangement), but they may be arranged in the axis L direction. That is, the stators having the armatures and the rotors having the permanent magnets may be arranged on opposite sides in the axis L direction of the rotor having the induction magnetic poles (axial arrangement). This arrangement is not part of the claimed invention.

Further, the stators 12L, 12R are wound in the concentrated manner in the embodiments, but the winding may be a distributed type.

Furthermore, the polar logarithms of the first and second stators 12L, 12R, the outer rotor 13 and the inner rotor 14 are not limited to those in the embodiments, and can be appropriately changed.

## Claims

1. A motor comprising:
annular stators (12L, 12R) arranged so as to surround an axis (L); a first rotor (14) rotatable around the axis (L); and a second rotor (13) arranged between the stator (12) and the first rotor (14), and rotatable around the axis (L),
wherein the stators (12L, 12R) comprise a first armature row and a second armature row arranged in the axis (L) direction, the first armature row including a plurality of first armatures (21L) arranged in a circumferential direction and generating a first rotating magnetic field rotating along the circumferential direction by a magnetic pole generated at the plurality of first armatures (21L) upon supply of electric power, the second armature row including a plurality of second armatures (21R) arranged in the circumferential direction and generating a second rotating magnetic field rotating along the circumferential direction by a magnetic pole generated at the plurality of second armatures (21R) upon supply of electric power;
wherein the first rotor (14) comprises a first permanent magnet row and a second permanent magnetic row arranged in the axis (L) direction, the first permanent magnet row including a plurality of first permanent magnets (52L) arranged so as to have magnetic poles with different polarities alternately with a predetermined pitch (P) in the circumferential direction, the second permanent magnetic row including a plurality of second permanent magnets (52R) arranged so as to have magnetic poles with different polarities alternately with the predetermined pitch (P) in the circumferential direction;
wherein the second rotor (13) comprises a first induction magnetic-pole row and a second induction magnetic-pole row arranged in the axis (L) direction, the first induction magnetic-pole row including a plurality of first induction magnetic poles (38L) arranged with the predetermined pitch (P) in the circumferential direction and made of a soft magnetic body; and the second induction magnetic-pole row including a plurality of second induction magnetic poles (38R) arranged with the predetermined pitch (P) in the circumferential direction and made of a soft magnetic body; and
wherein the first armature row and the first permanent magnet row are opposed to each other on opposite sides in the radial direction of the first induction magnetic-pole row, respectively, and the second armature row and the second permanent magnet row are opposed to each other on opposite sides in the radial direction of the second induction magnetic-pole row, respectively;
wherein
a phase of a magnetic pole of the first permanent magnet row and a phase of the magnetic pole of the second permanent magnet row of the first rotor (14) are displaced from each other by a half of the predetermined pitch (P) in the circumferential direction, a phase of the polarity of the first rotating magnetic field and a phase of the polarity of the second rotating magnetic field of the stator (12) are displaced from each other by a half of the predetermined pitch (P) in the circumferential direction, and a phase of the first induction magnetic pole (38L) and a phase of the second induction magnetic pole (38R) of the second rotor (13) are matched with each other.

2. The motor according to claim 1, wherein a plurality of slits (31a) extending linearly in the axis (L) direction are formed in a cylindrical rotor body (31) of the second rotor (13), and the first and second induction magnetic poles (38L, 38R) are fitted in the slits (31a).

3. The motor according to claim 1 or 2, wherein the second rotor (13) is made of a non-magnetic body, and the plurality of induction magnetic poles (38L, 38R) is supported on the second rotor (13) at predetermined intervals in a circumferential direction, wherein the induction magnetic poles (38L, 38R) are embedded in the second rotor (13).

4. The motor according to claim 3, wherein a part of each induction magnetic pole (38L, 38R) is exposed on an outer-circumferential surface of the second rotor (13).

5. The motor according to claim 3 or 4, wherein the second rotor (13) is in a cylindrical shape, and a part of each induction magnetic pole (38L, 38R) is exposed on an inner-circumferential surface of the second rotor (13).

6. The motor according to any of claims 3 to 5, wherein a face on which the second rotor (13) is brought into contact with the induction magnetic poles (38L, 38R) is in a shape which limits movement of the induction magnetic poles (38L, 38R) in the radial direction with respect to the second rotor (13).

7. The motor according to claim 6, wherein movement of the induction magnetic poles (38L, 38R) in the radial direction with respect to the second rotor (13) is limited by engagement between projections provided on the second rotor (13) and recesses (38a) provided in each induction magnetic pole (38L, 38R).

8. The motor according to any of claims 3 to 7, wherein the second rotor (13) comprises a plurality of slits (31a) extending in the axis (L) direction; and the plurality of induction magnetic poles (38L, 38R) and spacers (39) made of a non-magnetic body located between the induction magnetic poles (38L, 38R) adjacent in the axis (L) direction are embedded in the slits (31a).

9. The motor according to claim 8, wherein a face on which the second rotor (13) is brought into contact with the spacer (39) is in a shape which limits movement of the spacer (39) in the radial direction with respect to the second rotor (13).

10. The motor according to claim 8 or 9, wherein an outer circumferential face of the spacer (39) is covered by a ring (59) made of a non-magnetic body.

11. The motor according to any of claims 3 to 10, further comprising a holder (41) for limiting movement of the induction magnetic poles (38L, 38R) in the axis (L) direction with respect to the second rotor (13).

12. The motor according to any of claims 3 to 11, wherein the second rotor (13) further comprises a rotor body (31) in a bottomed cylindrical shape; a rotor cover (33) connected to the rotor body (31) so as to cover an opening of the rotor body (31); and rotating shafts (34, 36) are provided in bottom portions of the rotor body (31) and the rotor cover (33).

13. The motor according to any of claims 1 to 12, wherein an angle (θ2) formed by opposite ends in the circumferential direction of the induction magnetic poles (38L, 38R) of the induction magnetic-pole rows with respect to the axis (L) is set smaller than at least one of a machine angle (θ1) corresponding to an electric angle 180° of the armatures (21L, 21R) and a machine angle (θ0) corresponding to the electric angle 180° of the magnetic poles (52L, 52R) of the permanent magnetic rows.

## Patentansprüche

1. Motor, der aufweist:
ringförmige Statoren (12L, 12R), die derart angeordnet sind, dass sie eine Achse (L) umgeben; einen ersten Rotor (14), der um die Achse (L) drehbar ist;
und einen zweiten Rotor (13), der zwischen dem Stator (12) und dem ersten Rotor (14) angeordnet ist und um die Achse (L) drehbar ist,
wobei die Statoren (12L, 12R) eine erste Ankerreihe und eine zweite Ankerreihe aufweisen, die in der Achsen- (L-) Richtung angeordnet sind,
wobei die erste Ankerreihe mehrere erste Anker (21L) umfasst, die in einer Umfangsrichtung angeordnet sind, und durch einen Magnetpol, der an den mehreren ersten Ankern (21L) bei Zufuhr von elektrischer Leistung ein erstes rotierendes Magnetfeld erzeugt, das entlang der Umfangsrichtung rotiert, wobei die zweite Ankerreihe mehrere zweite Anker (21R) umfasst, die in der Umfangsrichtung angeordnet sind und durch einen Magnetpol, der an den mehreren zweiten Ankern (21R) bei Zufuhr von elektrischer Leistung erzeugt wird, ein zweites rotierendes Magnetfeld erzeugen, das entlang der Umfangsrichtung rotiert;
wobei der erste Rotor (14) eine erste Permanentmagnetreihe und eine zweite Permanentmagnetreihe aufweist, die in der Achsen- (L-) Richtung angeordnet sind, wobei die erste Permanentmagnetreihe mehrere erste Permanentmagnete (52L) umfasst, die derart angeordnet sind, dass sie mit einem vorgegebenen Abstand (P) in der Umfangsrichtung abwechselnd Magnetpole mit unterschiedlichen Polaritäten angeordnet haben, wobei die zweite Permanentmagnetreihe mehrere zweite Permanentmagnete (52R) umfasst, die derart angeordnet sind, dass sie mit dem vorgegebenen Abstand (P) in der Umfangsrichtung abwechselnd Magnetpole mit unterschiedlichen Polaritäten angeordnet haben;
wobei der zweite Rotor (13) eine erste Induktionsmagnetpolreihe und eine zweite Induktionsmagnetpolreihe aufweist, die in der Achsen- (L-) Richtung angeordnet sind, wobei die erste Induktionsmagnetpolreihe mehrere erste Induktionsmagnetpole (38L) umfasst, die mit dem vorgegebenen Abstand (P) in der Umfangsrichtung angeordnet sind und aus einem weichmagnetischen Körper gefertigt sind; und die zweite Induktionsmagnetpolreihe mehrere zweite Induktionsmagnetpole (38R) umfasst, die mit dem vorgegebenen Abstand (P) in der Umfangsrichtung angeordnet sind und aus einem weichmagnetischen Körper gefertigt sind; und
wobei die erste Ankerreihe und die erste Permanentmagnetreihe jeweils entgegengesetzt zueinander auf in der Radialrichtung der ersten Induktionsmagnetpolreihe entgegengesetzten Seiten sind, und die zweite Ankerreihe und die zweite Permanentmagnetreihe jeweils entgegengesetzt zueinander auf in der Radialrichtung der zweiten Induktionsmagnetpolreihe entgegengesetzten Seiten sind;
wobei
eine Phase eines Magnetpols der ersten Permanentmagnetreihe und eine Phase des Magnetpols der zweiten Permanentmagnetreihe des ersten Rotors (14) um eine Hälfte des vorgegebenen Abstands (P) in der Umfangsrichtung gegeneinander verschoben sind, eine Phase der Polarität des ersten rotierenden Magnetfelds und eine Phase der Polarität des zweiten rotierenden Magnetfelds des Stators (12) um eine Hälfte des vorgegebenen Abstands (P) in der Umfangsrichtung gegeneinander verschoben sind und eine Phase des ersten Induktionsmagnetpols (38L) und eine Phase des zweiten Induktionsmagnetpols (38R) des zweiten Rotors (13) aufeinander abgestimmt sind.

2. Motor nach Anspruch 1, wobei mehrere Schlitze (31a), die sich linear in der Achsen- (L-) Richtung erstrecken, in einem zylindrischen Rotorkörper (31) des zweiten Rotors (13) ausgebildet sind, und die ersten und zweiten Induktionsmagnetpole (38L, 38R) in die Schlitze (31a) montiert sind.

3. Motor nach Anspruch 1 oder 2, wobei der zweite Rotor (13) aus einem nichtmagnetischen Körper gefertigt ist, und die mehreren Induktionsmagnetpole (38L, 38R) in vorgegebenen Abständen in einer Umfangsrichtung auf dem zweiten Rotor (13) gehalten werden, wobei die Induktionsmagnetpole (38L, 38R) in den zweiten Rotor (13) eingebettet sind.

4. Motor nach Anspruch 3, wobei ein Teil jedes Induktionsmagnetpols (38L, 38R) auf einer Außenumfangsoberfläche des zweiten Rotors (13) freiliegt.

5. Motor nach Anspruch 3 oder 4, wobei der zweite Rotor (13) eine zylindrische Form hat und ein Teil jedes Induktionsmagnetpols (38L, 38R) auf einer Innenumfangsoberfläche des zweiten Rotors (13) freiliegt.

6. Motor nach einem der Ansprüche 3 bis 5, wobei eine Seite, auf welcher der zweite Rotor (13) in Kontakt mit den Induktionsmagnetpolen (38L, 38R) gebracht wird, eine Form hat, welche die Bewegung der Induktionsmagnetpole (38L, 38R) in der Radialrichtung in Bezug auf den zweiten Rotor (13) begrenzt.

7. Motor nach Anspruch 6, wobei die Bewegung der Induktionsmagnetpole (38L, 38R) in der Radialrichtung in Bezug auf den zweiten Rotor (13) durch den Eingriff zwischen Vorsprüngen, die auf dem zweiten Rotor (13) bereitgestellt sind, und Vertiefungen (38a) die in jedem Induktionsmagnetpol (38L, 38R) bereitgestellt sind, begrenzt ist.

8. Motor nach einem der Ansprüche 3 bis 7, wobei der zweite Rotor (13) mehrere Schlitze (31 a) aufweist, die sich in der Achsen- (L-) Richtung erstrecken; und die mehreren Induktionsmagnetpole (38L, 38R) und Abstandshalter (39), die aus einem nichtmagnetischen Körper gefertigt sind, der zwischen den Induktionsmagnetpolen (38L, 38R), die in der Achsen- (L-) Richtung benachbart sind, angeordnet ist, in die Schlitze (31 a) eingebettet sind.

9. Motor nach Anspruch 8, wobei eine Seite, auf welcher der zweite Rotor (13) in Kontakt mit dem Abstandshalter (39) gebracht wird, eine Form hat, welche die Bewegung des Abstandshalters (39) in der Radialrichtung in Bezug auf den zweiten Rotor (13) beschränkt.

10. Motor nach Anspruch 8 oder 9, wobei eine Außenumfangsseite des Abstandshalters (39) von einem Ring (59) bedeckt ist, der aus einem nichtmagnetischen Körper gefertigt ist.

11. Motor nach einem der Ansprüche 3 bis 10, der ferner eine Halterung (41) zum Begrenzen der Bewegung der Induktionsmagnetpole (38L, 38R) in der Achsen-(L-) Richtung in Bezug auf den zweiten Rotor (13) aufweist.

12. Motor nach einem der Ansprüche 3 bis 11, wobei der zweite Rotor (13) ferner aufweist: einen Rotorkörper (31) mit einer zylindrischen Form mit Boden; eine Rotorabdeckung (33), die mit dem Rotorkörper (31) verbunden ist, um eine Öffnung des Rotorkörpers (31) zu bedecken; und Drehwellen (34, 36), die in den unteren Abschnitten des Rotorkörpers (31) und der Rotorabdeckung (33) bereitgestellt sind.

13. Motor nach einem der Ansprüche 1 bis 12, wobei ein Winkel (θ2), der von entgegengesetzten Enden in der Umfangsrichtung der Induktionsmagnetpole (38L, 38R) der Induktionsmagnetpolreihe in Bezug auf die Achse (L) gebildet wird, kleiner festgelegt ist als ein Maschinenwinkel (θ1), der einem elektrischen Winkel von 180° der Anker (21L, 21R) entspricht, und/oder ein Maschinenwinkel (θ0), der dem elektrischen Winkel von 180° der Magnetpole (52L, 52R) der Permanentmagnetreihen entspricht.

## Revendications

1. Moteur comprenant :
des stators annulaires (12L, 12R) agencés de façon à entourer un axe (L) ; un premier rotor (14) pouvant être mis en rotation autour de l'axe (L) ; et un second rotor (13) agencé entre le stator (12) et le premier moteur (14), et pouvant être mis en rotation autour de l'axe (L),
dans lequel les stators (12L, 12R) comprennent une première rangée d'induits et une seconde rangée d'induits agencées dans la direction de l'axe (L), la première rangée d'induits comportant une pluralité de premiers induits (21L) agencés dans une direction circonférentielle et générant un premier champ magnétique rotatif tournant dans la direction circonférentielle par un pôle magnétique généré au niveau de la pluralité de premiers induits (21L) lors de l'alimentation en énergie électrique, la seconde rangée d'induits comprenant une pluralité de seconds induits (21R) agencés dans la direction circonférentielle et générant un second champ magnétique rotatif tournant dans la direction circonférentielle par rapport à un pôle magnétique généré au niveau de la pluralité des seconds induits (21R) lors de l'alimentation en énergie électrique ;
dans lequel le premier rotor (14) comprend une première rangée d'aimants permanents et une seconde rangée magnétique permanente agencées dans la direction de l'axe (L), la première rangée d'aimants permanents comportant une pluralité de premiers aimants permanents (52L) agencés de façon à ce que leurs pôles magnétiques aient des polarités différentes en alternance avec un pas (P) prédéterminé dans la direction circonférentielle, la seconde rangée magnétique permanente comportant une pluralité de seconds aimants permanents (52R) agencés de façon à ce que leurs pôles magnétiques aient des polarités différentes en alternance avec le pas (P) prédéterminé dans la direction circonférentielle ;
dans lequel le second rotor (13) comprend une première rangée de pôles magnétiques d'induction et une seconde rangée de pôles magnétiques d'induction agencées dans la direction de l'axe (L), la première rangée de pôles magnétiques d'induction comportant une pluralité de premiers pôles magnétiques d'induction (38L) agencée avec le pas (P) prédéterminé dans la direction circonférentielle et étant constituée d'un corps faiblement ferromagnétique ; et la seconde rangée de pôles magnétiques d'induction comportant une pluralité de seconds pôles magnétiques d'induction (38R) agencée avec le pas (P) prédéterminé dans la direction circonférentielle et constituée d'un corps faiblement ferromagnétique ; et
dans lequel la première rangée d'induits et la première rangée d'aimants permanents sont opposées l'une à l'autre sur des côtés opposés dans la direction radiale de la première rangée de pôles magnétiques d'induction, respectivement, et la seconde rangée d'induits et la seconde rangée d'aimants permanents sont opposées l'une à l'autre sur des côtés opposés dans la direction radiale de la seconde rangée de pôles magnétiques d'induction, respectivement ;
dans lequel
une phase d'un pôle magnétique de la première rangée d'aimants permanents et une phase du pôle magnétique de la seconde rangée d'aimants permanents du premier rotor (14) sont éloignées l'une de l'autre par une moitié du pas (P) prédéterminé dans la direction circonférentielle, une phase de la polarité du premier champ magnétique rotatif et une phase de la polarité du second champ magnétique rotatif du stator (12) sont éloignées l'une de l'autre par une moitié du pas (P) prédéterminé dans la direction circonférentielle, et une phase du premier pôle magnétique d'induction (38L) et une phase du second pôle magnétique d'induction (38R) du second rotor (13) correspondent l'une à l'autre.

2. Moteur selon la revendication 1, dans lequel une pluralité de fentes (31a) s'étendant de façon linéaire dans la direction de l'axe (L) est formée dans un corps de rotor cylindrique (31) du second rotor (13), et les premiers et seconds pôles magnétiques d'induction (38L, 38R) sont ajustés dans les fentes (31a).

3. Moteur selon la revendication 1 ou 2, dans lequel le second rotor (13) est constitué d'un corps antimagnétique, et la pluralité de pôles magnétiques d'induction (38L, 38R) est supportée sur le second rotor (13) à des intervalles prédéterminés dans une direction circonférentielle, dans lequel les pôles magnétiques d'induction (38L, 38R) sont incorporés dans le second rotor (13).

4. Moteur selon la revendication 3, dans lequel une partie de chaque pôle magnétique d'induction (38L, 38R) est exposée sur une surface circonférentielle externe du second rotor (13).

5. Moteur selon la revendication 3 ou 4, dans lequel le second rotor (13) est en forme cylindrique, et une partie de chaque pôle magnétique d'induction (38L, 38R) est exposée sur une surface circonférentielle interne du second rotor (13).

6. Moteur selon l'une quelconque des revendications 3 à 5, dans lequel une face sur laquelle le second rotor (13) est amené en contact avec les pôles magnétiques d'induction (38L, 38R) est dans une forme qui limite le mouvement des pôles magnétiques d'induction (38L, 38R) dans la direction radiale par rapport au second rotor (13).

7. Moteur selon la revendication 6, dans lequel le mouvement des pôles magnétiques d'induction (38L, 38R) dans la direction radiale par rapport au second rotor (13) est limité par une mise en prise entre des protubérances disposées sur le second rotor (13) et des évidements (38a) disposés dans chaque pôle magnétique d'induction (38L, 38R).

8. Moteur selon l'une quelconque des revendications 3 à 7, dans lequel le second rotor (13) comprend une pluralité de fentes (31a) s'étendant dans la direction de l'axe (L) ; et la pluralité de pôles magnétiques d'induction (38L, 38R) et d'entretoises (39) constituées d'un corps antimagnétique situés entre les pôles magnétiques d'induction (38L, 38R) adjacents dans la direction de l'axe (L) sont incorporés dans les fentes (31a).

9. Moteur selon la revendication 8, dans lequel une face sur laquelle le second rotor (13) est amené en contact avec l'entretoise (39) est dans une forme qui limite le mouvement de l'entretoise (39) dans la direction radiale par rapport au second rotor (13).

10. Moteur selon la revendication 8 ou 9, dans lequel une face circonférentielle externe de l'entretoise (39) est recouverte par un anneau (59) constitué d'un corps antimagnétique.

11. Moteur selon l'une quelconque des revendications 3 à 10, comprenant en outre un support (41) permettant de limiter le mouvement des pôles magnétiques d'induction (38L, 38R) dans la direction de l'axe (L) par rapport au second rotor (13).

12. Moteur selon l'une quelconque des revendications 3 à 11, dans lequel le second rotor (13) comprend en outre un corps de rotor (31) en forme de fond cylindrique ; un capot de rotor (33) relié au corps de rotor (31) de façon à recouvrir une ouverture du corps de rotor (31) ; et des arbres de rotation (34, 36) sont disposés dans des portions inférieures du corps de rotor (31) et du capot de rotor (33).

13. Moteur selon l'une quelconque des revendications 1 à 12, dans lequel un angle (θ2) formé par des extrémités opposées dans la direction circonférentielle des pôles magnétiques d'induction (38L, 38R) des rangées de pôles magnétiques d'induction par rapport à l'axe (L) est établi de façon à être plus petit qu'au moins l'un parmi un angle d'un angle de machine (θ1) correspondant à un angle électrique de 180° des induits (21L, 21R) et un angle de machine (θ0) correspondant à l'angle électrique de 180° des pôles magnétiques (52L, 52R) des rangées magnétiques permanentes.
